# EUROPEAN PATENT SPECIFICATION

(11) **EP 2 144 057 B1**
(45) Date of publication and mention of the grant of the patent: **10.04.2019**
(21) Application number: 08751965.8
(22) Date of filing: 23.04.2008
(51) Int. Cl.: G01N 27/447, G01N 37/00, B01D 57/02, B01L 3/00

(54) **METHOD FOR ANALYZING A SAMPLE CONTAINING GLYCOSYLATED HEMOGLOBIN AND GLUCOSE**
VERFAHREN ZUR ANALYSE EINER PROBE BEINHALTEND GLYKOHÄMOGLOBINE UND GLUCOSE
MÉTHODE D'ANALYSE D'UN ÉCHANTILLON CONTENANT DE L'HÉMOGLOBINE GLYCOSYLÉE ET DU GLUCOSE

(30) Priority: 27.04.2007 JP 2007119261
(43) Date of publication of application: 13.01.2010
(73) Proprietor: ARKRAY, Inc., Minami-ku Kyoto-shi Kyoto 601-8045 (JP)
(72) Inventor: NAKAYAMA, Yusuke, Kyoto 601-8045 (JP); SUGIYAMA, Koji, Kyoto 601-8045 (JP)
(74) Representative: Dehns
(86) International application number: PCT/JP2008/057827
(87) International publication number: WO 2008/139867

(56) References cited:
- EP-A1- 1 203 959
- EP-A2- 0 733 900
- WO-A1-96/22524
- WO-A1-2005/106448
- WO-A1-2008/029684
- WO-A1-2008/029685
- WO-A2-02/088321
- FR-A1- 2 825 649
- JP-A- 06 094 669
- JP-A- 11 337 524
- JP-A- 2000 146 910
- JP-A- 2000 310 615
- JP-A- 2004 069 430
- JP-A- 2004 077 305
- JP-A- 2004 151 041
- JP-A- 2008 170 351
- US-A- 5 431 793
- US-A1- 2006 177 350

## Description

### Technical Field

The present invention relates to a method for analyzing a sample containing both glycosylated hemoglobin and glucose using an analysis chip.

### Background Art

Analyses of both glycosylated hemoglobin and glucose are broadly performed as indicators of the condition of a living body for, *e.g.,* the treatment or diagnosis of diabetes. Because the degree of glycosylation of hemoglobin (Hb), especially HbA1c, in blood cells reflects the history of glucose levels in a living body, it is regarded as an important indicator in the diagnosis, and treatment, or the like, in diabetes. HbA1c is HbA(α₂β₂) whose β-chain N-terminal valine has been glycosylated.

HbA1c has been analyzed by, for example, immunological methods, enzymatic methods, and high-performance liquid chromatography (HPLC) methods, among others. Although immunological methods and enzymatic methods are generally used for processing and analyzing large numbers of specimens, they are of low accuracy when determining the risk of complications. On the other hand, although HPLC methods have poorer processing capabilities than immunological methods or enzymatic methods, they are useful in determining the risk of complications. However, due to the configuration of HPLC methods, the analysis apparatus is very large and costly. On the other hand, glucose has been analyzed by, for example, enzymatic methods, and electrode methods, among others.

An example of an apparatus that can analyze both HbA1c and glucose is an apparatus that analyzes HbA1c using an immunological method and analyzes glucose using an enzymatic method. In addition, there is also an apparatus that analyzes HbA1c using an HPLC method and analyzes glucose using an electrode method. Because the latter apparatus in particular can analyze the HbA1c content of a sample (specimen) with high accuracy, it is of use in places where examinations are carried out.

However, because such conventional apparatuses are configured such that an HbAlc analyzer and a glucose analyzer are combined into a single apparatus, they are problematic due to the installation space they require, and the costs associated with the apparatus itself and the expendables required for the two analyzers. In particular, although an apparatus that takes advantage of an HPLC method analyzes HbA1c with good accuracy as described above, it has the following problems (1) to (4). (1) Due to its configuration, the analysis apparatus is very large and costly as described above. For example, there are a large number of components and it is difficult to reduce the size of a high-pressure pump, or the like. (2) It requires skill to maintain an apparatus in a condition to perform highly accurate analyses and to actually perform a highly precise analysis. (3) Large amounts of reagent are used and large amounts of liquid waste are generated. (4) Starting up the apparatus takes time even when a small number of specimens are to be analyzed. These problems apply comprehensively to the cases where both glycosylated hemoglobin, including HbA1c, and glucose are analyzed.

US 2006/0177350 A1 discloses a microchip and a method of extracting a sample, a method of separating a sample, a method of analysing a sample, and a method of recovering a sample therewith.

EP 1203959 A1 discloses an analysing cartridge having a plurality of reservoirs and capillaries for communication between these reservoirs.

FR 2825649 A discloses microcolumns comprising micro-channels with an opening for introduction of an eluent enriched with a sample.

WO 02/088321 A2 discloses a device and method for concentration and purification of analytes.

US 2004/0084311 A1 discloses a biochip, a biochip manufacturing method, an electrophoresis method and an electrophoresis apparatus.

EP 1757926 A1 discloses an electrophoresis chip and an electrophoresis unit for analysing blood components, protein, and nucleic acids.

WO 96/22524 is directed to reagents and methods of capillary electrophoresis, which are suitable for measuring glycosylated proteins in clinical specimens.

### Disclosure of Invention

Therefore, there is disclosed herein a method capable of analyzing a sample containing both glycosylated hemoglobin and glucose using an analysis chip,wherein the method comprises analyzing glycosylated hemoglobin, and analyzing glucose, and wherein the glycosylated hemoglobin is analyzed by a capillary electrophoresis method. The present invention is disclosed in claim 1 and in claims dependent thereon. An analysis chip is used for carrying the method according to the invention. Said chip allows an apparatus to be small, analysis to be simple, analysis time to be short, and analysis of both glycosylated hemoglobin and glucose to be performed with high accuracy.

According to a first aspect of the present invention, there is provided a method capable of analyzing a sample containing both glycosylated hemoglobin and glucose using an analysis chip, wherein the method comprises analyzing glycosylated hemoglobin, and/or analyzing glucose, and wherein at least the glycosylated hemoglobin is analyzed by a capillary electrophoresis method, the analysis chip comprising: a substrate, a plurality of fluid reservoirs, a capillary channel for the capillary electrophoresis method, and a glucose analysis reagent, the plurality of fluid reservoirs comprising a first introduction reservoir and a first recovery reservoir, the capillary channel comprising a capillary channel for sample analysis, the first introduction reservoir and the first recovery reservoir being formed in the substrate, and the first introduction reservoir and the first recovery reservoir being in communication with each other via the capillary channel for sample analysis; wherein the analysis chip further comprises a pretreatment reservoir for hemolyzing and diluting the sample, the pretreatment reservoir being in communication with the first introduction reservoir, and wherein: A) the glucose analysis reagent is contained in the pretreatment reservoir; and/or B) the analysis chip further comprises a reagent reservoir, the glucose analysis reagent being contained in the reagent reservoir (100), the reagent reservoir being in communication with the first introduction reservoir via a channel that is independent of the capillary channel for sample analysis, or being in communication with the pretreatment reservoir.

The method of the present invention uses a chip wherein a first introduction reservoir and a first recovery reservoir are formed in a substrate, and the first introduction reservoir and the first recovery reservoir are in communication with each other via a capillary channel for sample analysis. Hence, for analyses of both glycosylated hemoglobin and glucose, the present invention allows an apparatus to be small, analysis to be simple, analysis time to be short, and analysis of both glycosylated hemoglobin and glucose to be performed with high accuracy. Therefore, it is possible with an analysis chip for use in the method of the present invention to accurately analyze glycosylated hemoglobin and glucose in, for example, POC (point of care) testing, and thus, to manage the risk of complications.

### Brief Description of Drawings

FIG. 1 shows diagrams illustrating an analysis chip in one working example for use in the method of the present invention.
FIG. 2 is a flowchart illustrating an example of a production process of an analysis chip for use in the method of the present invention.
FIG. 3 is a flowchart illustrating another example of a production process of an analysis chip for use in the method of the present invention.
FIG. 4 shows diagrams illustrating an analysis chip as mentioned above that is provided with electrodes for a capillary electrophoresis method.
FIG. 5 shows diagrams illustrating an example of an analysis apparatus including an analysis chip for use in the method of the present invention.
FIG. 6 shows diagrams illustrating another example of an analysis apparatus including an analysis chip for use in the method of the present invention.
FIG. 7 shows diagrams illustrating an analysis chip in another working example for use in the method of the present invention.
FIG. 8 shows diagrams illustrating an analysis chip in still another working example for use in the method of the present invention.
FIG. 9 shows diagrams illustrating an analysis chip of still another working example for use in the method of the present invention.
FIG. 10 shows diagrams illustrating an analysis chip as mentioned above that is provided with electrodes for a capillary electrophoresis method.
FIG. 11 shows diagrams illustrating still another example of an analysis apparatus including an analysis chip for use in the method of the present invention.
FIG. 12 is a diagram illustrating an analysis chip of still another working example for use in the method of the present invention.
FIG. 13 is a diagram illustrating an analysis chip of still another working example for use in the method of the present invention.
FIG. 14 is a diagram illustrating an analysis chip of still another working example for use in the method of the present invention.

### Description of the Preferred Embodiments

An analysis chip for use in the method of the present invention may be configured such that:
the plurality of fluid reservoirs further includes a second introduction reservoir and a second recovery reservoir,
the capillary channel further includes a capillary channel for sample introduction,
the second introduction reservoir and the second recovery reservoir are formed in the substrate,
the second introduction reservoir and the second recovery reservoir are in communication with each other via the capillary channel for sample introduction,
the capillary channel for sample analysis and the capillary channel for sample introduction intersect, and
the capillary channel for sample analysis and the capillary channel for sample introduction are in communication with each other at the intersection.

An analysis chip for use in the method of the present invention may be configured such that:
a first branching channel branches off from a part of the capillary channel for sample analysis,
the first branching channel is in communication with the second introduction reservoir,
a second branching channel branches off from a part of the capillary channel for sample analysis that is located on the downstream side relative to the first branching channel,
the second branching channel is in communication with the second recovery reservoir, and
the capillary channel for sample introduction is formed by the first branching channel, the second branching channel and the part of the capillary channel for sample analysis that connects the branching channels.

In an analysis chip for use in the method of the present invention, the maximum length of the whole chip is in a range of, for example, 10 to 100 mm and preferably in a range of 30 to 70 mm; the maximum width of the whole chip is in a range of, for example, 10 to 60 mm; and the maximum thickness of the whole chip is in
a range of, for example, 0.3 to 5 mm. The maximum length of a whole chip refers to the dimension of the longest portion of the chip in the longitudinal direction; the maximum width of a whole chip refers to the dimension of the longest portion of the chip in a direction (width direction) perpendicular to the longitudinal direction; and the maximum thickness of a whole chip refers to the dimension of the longest portion of the chip in a direction (thickness direction) perpendicular to both the longitudinal direction and the width direction.

It is preferable that an analysis chip for use in the method of the present invention is such that during analyzing glycosylated hemoglobin and glucose, a diluted sample (a sample containing glycosylated hemoglobin and glucose diluted with an electrophoresis running buffer) is introduced into at least one reservoir among the plurality of fluid reservoirs, and the volume ratio of the sample : the electrophoresis running buffer is in a range of 1:4 to 1:99. The volume ratio of the sample : the electrophoresis running buffer is more preferably in a range of 1:9 to 1:59, and still more preferably in a range of 1:19 to 1:29.

In an analysis chip for use in the method of the present invention, the capillary channel is filled with an electrophoresis running buffer.

In an analysis chip for use in the method of the present invention, the maximum diameter of the capillary channel is in a range of, for example, 10 to 200 µm and preferably in a range of 25 to 100 µm; and the maximum length thereof is in a range of, for example, 0.5 to 15 cm. When the shape of the cross section of the capillary channel is not circular, the maximum diameter of the capillary channel refers to the diameter of a circle having an area that corresponds to the cross sectional area of a portion having the largest cross-sectional area.

In an analysis chip for use in the method of the present invention, an inner wall of the capillary channel may be coated with a cationic group-containing compound. Examples of cationic group-containing compounds include compounds that contain cationic groups and reactive groups. Preferable examples of cationic groups include amino groups and ammonium groups. A preferable example of a cationic group-containing compound is a silylating agent that contains at least an amino group or an ammonium group. The amino group may be any of a primary, secondary or tertiary amino group.

Examples of silylating agents include:
N-(2-diaminoethyl)-3-propyltrimethoxysilane, aminophenoxydimethylvinylsilane, 3-aminopropyldiisopropylethoxysilane, 3-aminopropylmethylbis(trimethylsiloxy)silane, 3-aminopropylpentamethyldisiloxane, 3-aminopropylsilanetriol, bis(p -aminophenoxy)dimethylsilane, 1,3-bis(3-aminopropyl)tetramethyldisiloxane, bis(dimethylamino)dimethylsilane, bis(dimethylamino) vinylmethylsilane, bis(2-hydroxyethyl)-3-aminopropyltriethoxysilane, 3-cyanopropyl(diisopropyl)dimethylaminosilane, (aminoethylaminomethyl)phenethyltrimethoxysilane, N-methylaminopropyltriethoxysilane, tetrakis(diethylamino)silane, tris(dimethylamino)chlorosilane, and tris(dimethylamino)silane, among others.

Among such silylating agents, those in which silicon atom(s) are substituted with titanium or zirconium may be used. Such silylating agents may be used singly or may be used in a combination of two or more.

Coating of an inner wall of a capillary channel with a silylating agent is performed, for example, as follows. First, a silylating agent is dissolved or dispersed in an organic solvent to prepare a treatment fluid. Examples of organic solvents for use in the preparation of the treatment fluid may be dichloromethane, and toluene, and the like. The concentration of the silylating agent in the treatment fluid is not particularly limited. This treatment fluid is passed through the capillary channel, and then heated. Due to this heating, the silylating agent is bonded to the inner wall of the capillary channel by covalent bonding, resulting in a cationic group being disposed on the inner wall of the capillary channel. Thereafter, washing (after-treatment) is performed with at least an organic solvent (dichloromethane, methanol, acetone, or the like), an acid solution (phosphoric acid or the like), an alkaline solution, or a surfactant solution. Although this washing is optional, it is preferable to perform such washing. Moreover, when a capillary tube that is a member independent of the substrate serves as the capillary channel, a capillary tube whose inner wall is coated with a cationic group-containing compound through the use of a commercially available silylating agent of an aforementioned kind may be used.

It is preferable that an anionic layer formed from an anionic group-containing compound is further laminated on the inner wall of a capillary channel that has been coated with a cationic group-containing compound. It is thus possible to prevent hemoglobin, or the like, present in a sample (described below) from being adsorbed onto the inner wall of a capillary channel. Moreover, due to the formation of a complex between the sample and an anionic group-containing compound and due to the electrophoresis thereof, separation efficiency is enhanced compared with electrophoresis of sample alone. As a result, analysis of glycosylated hemoglobin, or the like, can be performed more accurately in a shorter period of time. An anionic group-containing polysaccharide is preferable as the anionic group-containing compound that forms a complex with the sample. Examples of anionic group-containing polysaccharides include: sulfated polysaccharides, carboxylated polysaccharides, sulfonated polysaccharides and phosphorylated polysaccharides. Among these, sulfated polysaccharides and carboxylated polysaccharides are preferable. The sulfated polysaccharides are preferably chondroitin sulfate, and heparin, among others, with chondroitin sulfate being particularly preferable. The carboxylated polysaccharides are preferably alginic acid and salts thereof (for example, sodium alginate). There are seven types of chondroitin sulfate, *i.e.,* chondroitin sulfate A, chondroitin sulfate B, chondroitin sulfate C, chondroitin sulfate D, chondroitin sulfate E, chondroitin sulfate H, and chondroitin sulfate K, and any of these types may be used. An anionic layer can be formed by, for example, bringing a fluid that contains an anionic group-containing compound into contact with an inner wall of a capillary channel that has been coated with a cationic group-containing compound. In this case, although a fluid for forming an anionic layer may be prepared separately, it is preferable in terms of operation efficiency that an electrophoresis running buffer that contains the anionic group-containing compound is prepared and is passed through the capillary channel whose inner wall is coated with the cationic group-containing compound.

The electrophoresis running buffer is not particularly limited, and an electrophoresis running buffer that uses an organic acid is preferable. Examples of organic acids include maleic acid, tartaric acid, succinic acid, fumaric acid, phthalic acid, malonic acid, and malic acid, among others. Preferably, the electrophoresis running buffer contains a weak base. Examples of weak bases include arginine, lysine, histidine, and tris, among others. The pH of the electrophoresis running buffer is in a range of, for example, 4.5 to 6. In the electrophoresis running buffer, the concentration of the anionic group-containing compound is in a range of, for example, 0.001 to 10 wt%.

In the present invention, a method for analyzing glucose is not limited, and known methods can be used. A specific example is a method in which a redox reaction is carried out using glucose as a substrate and then the redox reaction is examined to analyze glucose. An analysis chip for use in the method of the present invention further contains a glucose analysis reagent, which will be described later. The glucose analysis reagent may be contained in the pretreatment reservoir. Moreover, an analysis chip for use in the method of the present invention may further include a reagent reservoir, and the glucose analysis reagent may be contained in the reagent reservoir. The reagent reservoir is in communication with the first introduction reservoir or the pretreatment reservoir.

Next, specific examples of glucose analysis reagents are described in combination with a method for analyzing glucose in which a reagent is applied. However, the present invention is not limited thereto.

Firstly, an example of a glucose analysis reagent is a reagent that contains a glucose oxidase, a peroxidase and a chromogenic substrate. For example, a substrate that develops a color due to oxidation is preferable as the chromogenic substrate, such as, sodium N-(carboxymethylaminocarbonyl)-4,4'-bis(dimethylamino)diphenylamine (trade name: DA-64, manufactured by Wako Pure Chemical Industries, Ltd.), 10-(carboxymethylaminocarbonyl)-3,7-bis(dimethylamino)phenothiazine or salts thereof (for example, trade name: DA-67, manufactured by Wako Pure Chemical Industries, Ltd.), hexasodium N,N,N',N',N",N"-hexa(3-sulfopropyl)-4,4',4"-triaminotriphenylmethane (for example, trade name: TPM-PS, manufactured by Dojindo Laboratories), sodium N-(carboxymethylaminocarbonyl)-4,4'-bis(dimethylamino)diphenylamine, orthophenylenediamine (OPD), and a substrate prepared by combining a Trinder's reagent and 4-aminoantipyrine, among others. Examples of Trinder's reagent include: phenol, a phenol derivative, an aniline derivative, naphthol, a naphthol derivative, naphthylamine, and a naphthylamine derivative, among others. Moreover, an aminoantipyrine derivative (*i.e.,* vanillindiamine sulfonate, methyl benzthiazolinone hydrazone (MBTH), or sulfonated methyl benzthiazolinone hydrazone (SMBTH), among others) can be used in place of 4-aminoantipyrine. When such a glucose analysis reagent is used, glucose can be analyzed, for example, in the following manner. That is, first, a glucose oxidase is reacted with the glucose (substrate) to produce glucolactone and hydrogen peroxide. Then, due to the catalytic reaction (redox reaction) of a peroxidase that uses the thus-produced hydrogen peroxide and the chromogenic substrate as substrates, the chromogenic substrate is oxidized and develops a color. Because the extent of this color development corresponds to the amount of hydrogen peroxide, and because the amount of hydrogen peroxide corresponds to the amount of glucose, quantitative analysis of the glucose can be performed indirectly by measuring the color development.

Alternatively, a reagent that contains a redox enzyme and an electrochromic substance can also be mentioned as an example of a glucose analysis reagent. The electrochromic substance is not particularly limited insofar as, for example, the color tone thereof is changed due to the transfer of electrons. Specific examples include viologen, and viologen derivatives, among others. Examples of viologen derivatives include: diphenyl viologen, and dinitrophenyl viologen, among others. Among these, dinitrophenyl viologen is preferable. The electrochromic substances used may be commercially available, or can be prepared using known methods. Examples of redox enzymes include glucose oxidase (GOD), and glucose dehydrogenase, among others. When such a glucose analysis reagent is used, glucose can be analyzed, for example, in the following manner. That is, the glucose is reacted with the redox enzyme in the presence of an electrochromic substance. Due to this enzymatic reaction (redox reaction), electrons are liberated from the glucose. Then, due to the transfer of the liberated electrons to the electrochromic substance, the color tone of the electrochromic substance changes. Because this change in color-tone corresponds to the amount of glucose, quantitative analysis of glucose can be performed indirectly by measuring the change in color-tone.

Furthermore, a reagent that contains a redox enzyme and a tetrazolium salt having a mediator function can be mentioned as an example of a glucose analysis reagent. Examples of the redox enzyme include those that are identical to the enzymes that can be used in the reagent containing the electrochromic substance. Preferable examples of tetrazolium salts are those having at least one group from among a nitrophenyl group, a thiazolyl group and a benzothiazolyl group. Examples of tetrazolium salts include 3-(4,5-dimethyl-2-thiazolyl)-2,5-diphenyl-2 H-tetrazolium bromide (MTT), 2-(4-iodophenyl)-3-(4-nitrophenyl)-5-phenyl-2H-tetrazolium chloride (INT), 3,3'-[3,3'-dimethoxy-(1,1'-biphenyl)-4,4'-diyl]-bis [2-(4-nitrophenyl)-5-phenyl-2H-tetrazolium chloride] (Nitro-TB), 2-(4-iodophenyl)-3-(4-nitrophenyl)-5-(2,4-disulfophenyl)-2H-tetrazolium monosodium salt (WST-1), 2-(4-iodophenyl)-3-(2,4-dinitrophenyl)-5-(2,4-disulfophenyl)-2H-tetrazolium monosodium salt (WST-3), 2-benzothiazolyl-3-(4-carboxy-2-methoxyphenyl)-5-[4-(2-sulfoethylcarbamoyl) phenyl]-2H-tetrazolium (WST-4), 2,2'-dibenzothiazolyl-5,5'-bis[4-di(2-sulfophenyl)carbamoylphenyl]-3,3'-(3,3,-di methoxy-4,4'-biphenylene)ditetrazolium disodium salt (WST-5), 2-(2-methoxy-4-nitrophenyl)-3-(4-nitrophenyl)-5-(2,4-disulfophenyl)-2H-tetraz olium monosodium salt (WST-8), 2,3-bis(4-nitrophenyl)-5-phenyltetrazolium chloride, 2-(2-benzothiazolyl)-3,5-dophenyltetrazolium bromide, 2-(2-benzothiazolyl)-3-(4-nitrophenyl)-5-phenyltetrazolium bromide, 2,3-di(4-nitrophenyl)tetrazolium perchlorate, 3-(3-nitrophenyl)-5-methyl-2-phenyltetrazolium chloride, and 3-(4-nitrophenyl)-5-methyl-2-phenyltetrazolium chloride, among others. When such a glucose analysis reagent is used, glucose can be analyzed, for example, in the following manner. That is, the glucose is reacted with the redox enzyme in the presence of an aforementioned tetrazolium salt. Due to this enzymatic reaction (redox reaction), electrons are liberated from the glucose. Then, due to the transfer of the liberated electrons to the tetrazolium compound, the tetrazolium compound develops a color. Because the extent of this color development corresponds to the amount of glucose, quantitative analysis of the glucose can be performed indirectly by measuring the extent of color development.

A means of measuring the reaction between the glucose and the glucose analysis reagent is also not particularly limited, and the measurement can be carried out using a suitable optical measurement instrument. The optical measurement instrument may be a part of an analysis chip (analysis apparatus), or may be a separate instrument. The optical measurement instrument is not particularly limited and may be, for example, a spectrophotometer, a photosensor, a UV spectrometer, or an LED-equipped optical measurement instrument, among others. In an analysis chip (analysis apparatus), the components (such as an enzyme and a substrate) of a glucose analysis reagent (described above) may be disposed, for example, in a mixed state, or each component may be disposed separately and independently.

In the present invention, the method for analyzing the glucose may be, for example, an electrode method as an alternative to the method described above in which color development that occurs in association with the redox reaction is detected. In the case of an electrode method, it is preferable that an analysis chip for use in the method of the present invention further includes, for example, electrodes (a cathode and an anode) for use in the electrode method and a
glucose analysis reagent, and it is preferable that the electrodes and the glucose analysis reagent are disposed such that they are placed in at least one reservoir among the plurality of reservoirs and the pretreatment reservoir. In such an analysis chip, glucose can be analyzed by an electrode method, for example, using electrodes and a glucose analysis reagent. It is more preferable that electrodes used in an electrode method and the glucose analysis reagent are disposed such that they are positioned in at least one reservoir among, for example, the first introduction reservoir, the second introduction reservoir and the pretreatment reservoir. In an analysis chip for use in the method of the present invention, electrodes for use in an electrode method are optional components. The electrodes for use in an electrode method may be inserted into at least one reservoir among the plurality of fluid reservoirs and the pretreatment reservoir, for example, when the analysis chip is used. The electrodes for use in an electrode method may be components of, for example, an analysis apparatus. A specific example of a glucose analysis reagent that may be used with such an electrode method is described below. However, the present invention is not limited thereto.

An example of a glucose analysis reagent that can be used with an electrode method is a reagent that contains a redox enzyme and an electron acceptor. Examples of redox enzymes include those identical to the enzymes for use in a reagent (described above) containing an electrochromic substance. Examples of electron acceptors that may be used include: potassium ferricyanide, p-benzoquinone, phenazine methosulfate, indophenol and derivatives thereof, potassium β-naphthoquinone-4-sulfonate, methylene blue, ferrocene and derivatives thereof, osmium complexes, ruthenium complexes, NAD⁺, NADP⁺, and pyrroloquinone (PQQ), among others. When such a glucose analysis reagent is used, glucose can be analyzed, for example, in the following manner. That is, due to the catalytic reaction of the redox enzyme, glucose is oxidized simultaneously with the electron acceptor being reduced. Then, the reduced electron acceptor is reoxidized by an electrochemical
technique. Because an oxidation current value obtained from this reoxidation corresponds to the amount of glucose, quantitative analysis of the glucose can be performed indirectly by measuring the current. The electrodes used in an electrode method are not particularly limited, and examples include gold electrodes, carbon electrodes, and silver electrodes, among others. The form of the electrodes used in an electrode method is also not particularly limited and, for example, they may be electrodes in which a GOD enzyme film is fixed to a film-like electrode surface (glucose electrode film).

In an analysis chip for use in the method of the present invention, analysis of glucose may be carried out by, for example, a capillary electrophoresis method. The means of analysis in this case is not particularly limited, and it is preferable that, for example, an analysis chip for use in the method of the present invention further include a detector that analyzes glucose by indirect absorption spectroscopy (indirect UV detection method).

Regarding analysis chips for use in the method of the present invention, when analysis of glucose is carried out by a capillary electrophoresis method, it is preferable (from an analysis accuracy point of the view, and the like) that the glucose is a glucose derivative into which an ionic functional group has been introduced. The method for introducing an ionic functional group into glucose to form a derivative is not limited, and a method for forming a boric acid complex between the glucose and boric acid under alkaline conditions can be mentioned as an example. Because the boric acid complex is anionic, capillary electrophoresis is possible. A method in which a derivative of the glucose is formed with ethyl 4-aminobenzoate can be also mentioned as an example of a method for introducing an ionic functional group into glucose. Because such a derivative of glucose is cationic, capillary electrophoresis is possible.

The glycosylated hemoglobin analyzed using an analysis chip for use in the method of the present invention is not particularly limited, and examples include HbA1c,
labile HbA1c, and GHbLys, among others, with HbA1c being particularly preferable.

An analysis chip for use in the method of the present invention may be configured such that:
a substrate includes an upper substrate and a lower substrate,
a plurality of through-holes are formed in the upper substrate,
a groove is formed in the lower substrate,
the upper substrate is laminated onto the lower substrate,
spaces created by sealing the bottom parts of the plurality of through-holes formed in the upper substrate with the lower substrate serve as a plurality of fluid reservoirs, and
a space created by sealing the upper part of the groove formed in the lower substrate with the upper substrate serves as a capillary channel.

An analysis chip for use in the method of the present invention may be configured such that:
a plurality of concave portions and a groove are formed in a substrate,
a surface of the substrate is sealed with a sealing material that has openings at places corresponding to the plurality of concave portions,
the plurality of concave portions formed in the substrate serve as a plurality of fluid reservoirs, and
a space created by sealing the upper part of the groove formed in the substrate with the sealing material serves as a capillary channel.

An analysis chip for use in the method of the present invention may be configured such that:
the analysis chip further includes a sealing material,
a plurality of through-holes are formed in a substrate,
a groove is formed in the bottom surface of a substrate,
the bottom surface of the substrate is sealed with the sealing material, spaces created by sealing the bottom parts of the plurality of through-holes formed in the substrate with the sealing material serve as a plurality of fluid reservoirs; and
a space created by sealing the lower part of the groove formed in the bottom surface of the substrate with the sealing material serves as a capillary channel.

An analysis chip for use in the method of the present invention may be configured such that a plurality of fluid reservoirs are in communication with each other via a capillary tube that is a member independent of the substrate, and the capillary tube may serve as a capillary channel. The material of the capillary tube is not particularly limited. Examples of the material of the capillary tube include glass, fused silica, and plastics, among others. The glass or fused silica capillary tubes used may be commercially available products. The plastic capillary tubes used may also be commercially available products, and examples include capillary tubes made from, for example, polymethylmethacrylate, polycarbonate, polystyrene, polytetrafluoroethylene (PTFE), or polyether ether ketone (PEEK), among others.

In an analysis chip for use in the method of the present invention, the volumes of a plurality of fluid reservoirs are not particularly limited, and are each in a range of, for example, 1 to 1000 mm³ and preferably in a range of 50 to 100 mm³.

An analysis chip for use in the method of the present invention may be configured such that the analysis chip further includes a plurality of electrodes for use with a capillary electrophoresis method, and the plurality of electrodes may be disposed such that their first ends are placed in the plurality of fluid reservoirs.

An analysis apparatus for use in the method of the present invention may further include electrodes (a cathode and an anode) for use with an electrode method.

### Examples

Next, examples of the present invention are described. The present invention, however, is neither limited nor restricted by the examples below.

### Example 1

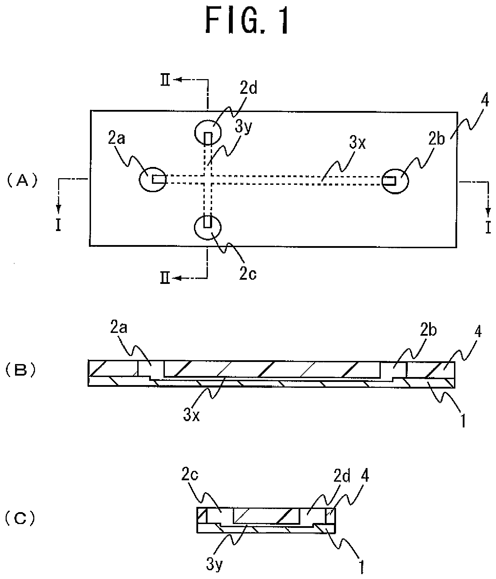

FIG. 1 shows an analysis chip of this example. FIG. 1(A) is a plan view of an analysis chip of this example, FIG. 1(B) is a cross-sectional view when taken along I-I of FIG. 1(A), and FIG. 1(C) is a cross-sectional view when taken along II-II of FIG. 1(A). For easier understanding, the size, proportions and like features of each component in the illustrations are different from the actual features of each component. This analysis chip is, as shown in the figures, configured such that an upper substrate 4 is laminated onto a lower substrate 1. A plurality of through-holes (four in this example) is formed in the upper substrate 4. The bottom parts of the four through-holes formed in the upper substrate 4 are sealed with the lower substrate 1 and, thus, fluid reservoirs 2a to 2d are formed. Across-shaped groove is formed in the lower substrate 1. By sealing the upper part of the cross-shaped groove formed in the lower substrate 1 with the upper substrate 4, a capillary channel for sample analysis 3x and a capillary channel for sample introduction 3y are formed. The four fluid reservoirs 2a to 2d include a first introduction reservoir 2a, a first recovery reservoir 2b, a second introduction reservoir 2c and a second recovery reservoir 2d. The first introduction reservoir 2a and the first recovery reservoir 2b are in communication with each other via the capillary channel for sample analysis 3x. The second introduction reservoir 2c and the second recovery reservoir 2d are in communication with each other via the capillary channel for sample introduction 3y. The capillary channel for sample analysis 3x and the capillary channel for sample introduction 3y intersect. The capillary channel for sample analysis 3x and the capillary channel for sample introduction 3y are in communication with each other at the intersection. An analysis chip of this example is rectangular parallelepipedic. However, the present invention is not limited thereto. An analysis chip for use in the method of the present invention may be in any shape insofar as it does not adversely affect the analysis of glycosylated hemoglobin and glucose. The planar shape of an
analysis chip of this example is rectangular. However, the present invention is not limited thereto. The planar shape of an analysis chip for use in the method of the present invention may be a square or may be of another form. In an analysis chip of this example, the maximum length of the capillary channel for sample analysis 3x and the maximum length of the capillary channel for sample introduction 3y are different. However, the present invention is not limited thereto. In an analysis chip for use in the method of the present invention, the maximum length of the capillary channel for sample analysis 3x and the maximum length of the capillary channel for sample introduction 3y may be the same. Furthermore, an analysis chip of this example includes two capillary channels (3x, 3y). However, an analysis chip for use in the method of the present invention is not limited thereto. For example, an exemplary analysis chip may include the capillary channel for sample analysis 3x only. In this case, only the first introduction reservoir 2a and the first recovery reservoir 2b are formed in the lower substrate 1, and the first introduction reservoir 2a and the first recovery reservoir 2b are in communication with each other via the capillary channel for sample analysis 3x. In this analysis chip, when glucose is analyzed by an electrode method, the positions of the electrodes (a cathode and an anode) and the glucose analysis reagent (not shown) are not limited, and the electrodes and the reagent are preferably placed in at least one reservoir among the four reservoirs 2a to 2d. For example, the second introduction reservoir 2c may include therein the electrodes (a cathode and an anode) for use with an electrode method and the glucose analysis reagent. Moreover, when glucose is analyzed using, for example, a reagent that develops a color in association with a redox reaction, the site where the glucose analysis reagent is contained is not particularly limited, and it is preferable that the glucose analysis reagent is contained in, for example, at least one of the four fluid reservoirs 2a to 2d. The glucose analysis reagent may be contained in only one of the four fluid reservoirs 2a to 2d such as, for example, the second introduction reservoir 2c. Furthermore, an analysis
chip of this example includes two substrate pieces (an upper substrate 4 and a lower substrate 1). However, an analysis chip for use in the method of the present invention is not limited thereto. An analysis chip for use in the method of the present invention may be composed of, for example, a single-piece substrate as described below.

Next, a method for producing an analysis chip of this example is described. The analysis chip, however, may be produced by methods other than the production method described below.

In an analysis chip of this example, a substrate formed from, for example, a glass material, a polymeric material or the like can be used as the lower substrate 1. Examples of the glass material include synthetic silica glass, and borosilicate glass, among others. Examples of polymeric materials include polymethylmethacrylate (PMMA), cycloolefin polymer (COP), polycarbonate (PC), polydimethylsiloxane (PDMS), polystyrene (PS), and polylactic acid, among others.

In an analysis chip of this example, the length and the width of the lower substrate 1 correspond to the maximum length and the maximum width of the whole chip as described above. Therefore, the length and the width of the lower substrate 1 are arranged to be identical to the maximum length and the maximum width of the whole chip as described above. The thickness of the lower substrate 1 in an analysis chip of this example is in a range of, for example, 0.1 to 3 mm and preferably in a range of 0.1 to 1 mm.

The material of the upper substrate 4 is not particularly limited insofar as it does not adversely affect an absorbance measurement that will be described below. For example, an upper substrate that is formed from the same material as the lower substrate 1 can be used as the upper substrate 4.

The length and the width of the upper substrate 4 are the same as the length and the width of the lower substrate 1, respectively. The thickness of the upper substrate 4 is suitably determined according to the volumes or like factors of the plurality of fluid reservoirs 2a to 2d and, for example, it is in a range of 0.1 to 3 mm and preferably in a range of 1 to 2 mm.

The width and the depth of the cross-shaped groove (the capillary channel for sample analysis 3x and the capillary channel for sample introduction 3y) are suitably determined according to the maximum diameter of the capillary channel and, for example, the width thereof is in a range of 25 to 200 µm and the depth thereof is in a range of 25 to 200 µm, and preferably the width thereof is in a range of 40 to 100 µm and the depth thereof is in a range of 25 to 200 µm. The maximum length of the capillary channel for sample analysis 3x and the maximum length of the capillary channel for sample introduction 3y are as described above.

The volumes of the plurality of fluid reservoirs 2a to 2d are as described above. In FIG. 1, the shapes of the plurality of fluid reservoirs 2a to 2d are cylindrical. However, an analysis chip for use in the method of the present invention is not limited to this. In an analysis chip for use in the method of the present invention, the shapes of the plurality of fluid reservoirs are not particularly limited insofar as the introduction and the recovery of a sample are not adversely affected, which will be described below and, for example, the reservoirs can be in any shape such as a quadrangular prism, a quadrangular pyramid, a cone or a combination of these shapes. Furthermore, the volumes and the shapes of the plurality of fluid reservoirs may all be the same or may each be different.

In an analysis chip of this example, the maximum thickness of the whole chip is the sum of the thickness of the lower substrate 1 and the thickness of the upper substrate 4. The maximum thickness of the whole chip is as described above.

For example, when the material of the lower substrate 1 is glass, the analysis chip can be produced as follows.

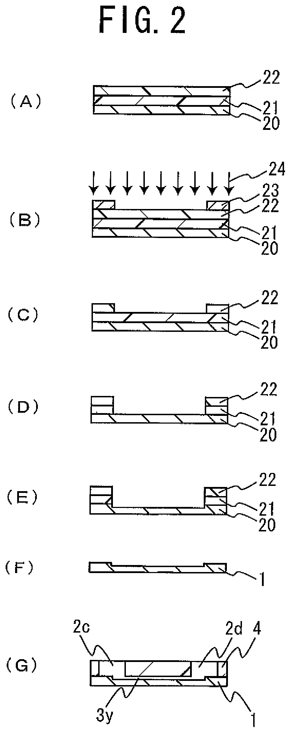

First, a surface of a glass plate 20 is masked with an alloy 21 of chromium and gold as shown in FIG. 2(A). A surface of the alloy 21 is then coated with a photoresist 22.

Next, a photosensitive film on which a layout pattern for a capillary channel for sample analysis 3x and a capillary channel for sample
introduction 3y is drawn is adhered to a surface of the photoresist 22 as shown in FIG. 2(B) to prepare a photomask 23. Ultraviolet rays 24 are then irradiated over the photomask 23 for exposure.

Due to the exposure, the exposed portions of the photoresist 22 are solubilized as shown in FIG. 2(C) to form (transfer) the layout pattern on the alloy 21.

Next, the revealed portions of the alloy 21 are removed by aqua regia as shown in FIG. 2(D).

The layout pattern is then etched with hydrogen fluoride into the glass plate 20 as shown in FIG. 2(E).

Next, the photoresist 22 and the alloy 21 are removed to give the lower substrate 1 as shown in FIG. 2(F).

Next, the upper substrate 4 is prepared (not shown). A method for forming the four through-holes in the upper substrate 4 is not particularly limited. For example, when the material of the upper substrate 4 is glass, an example of a formation method is ultrasonic machining or the like. For example, when the material of the upper substrate 4 is a polymeric material, examples of a formation method include a cutting method; a molding method (such as injection molding, cast molding and press molding using a metal mold); and like methods. The four through-holes may each be formed separately or may all be formed simultaneously. When the four through-holes are formed separately, they may be formed in any order. Forming all four through-holes simultaneously by an aforementioned method that uses a metal mold or a like method requires a small number of steps and is thus preferable.

Finally, by laminating the lower substrate 1 and the upper substrate 4, an analysis chip of this example can be produced. A method for laminating the lower substrate 1 and the upper substrate 4 is not particularly limited and, and thermal welding is preferable. Although a production process was described in reference to FIG. 2, which shows cross sections corresponding to that shown in FIG. 1(C), the same production process can be applied to the cross section shown in FIG. 1(B).

For example, when the material of the lower substrate 1 is a polymeric material, the analysis chip can be produced as follows.

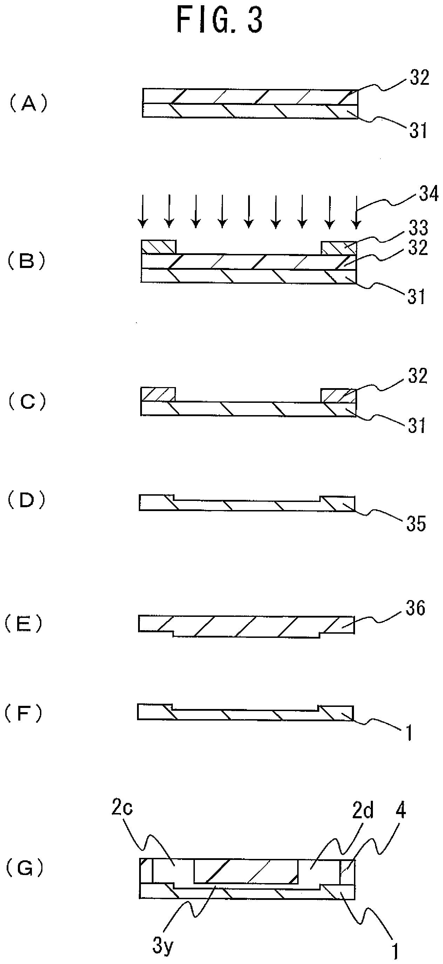

First, a surface of a silicon plate 31 is coated with a photoresist 32 as shown in FIG. 3(A).

Next, a photosensitive film on which a layout pattern for a capillary channel for sample analysis 3x and a capillary channel for sample introduction 3y is drawn is adhered to a surface of the photoresist 32 as shown in FIG. 3(B) to prepare a photomask 33. Irradiation with ultraviolet rays 34 is then performed over the photomask 33 for exposure.

Due to the exposure, the exposed portions of the photoresist 32 are solubilized as shown in FIG. 3(C) to form (transfer) the layout pattern on the silicon plate 31.

Next, the layout pattern is etched into the silicon plate 31 to prepare a base mold 35 as shown in FIG. 3(D). Examples of the etching include dry etching, and anisotropic etching, among others. The etching is preferably dry etching in view of the dimensional accuracy and the surface smoothness of the capillary channel for sample analysis 3x and the capillary channel for sample introduction 3y.

Metallic nickel electrocasting is then performed on the base mold 35 to prepare a metal mold for injection molding 36 as shown in FIG. 3(E).

Next, a lower substrate 1 composed of a polymeric material is prepared by injection molding using a metal mold for injection molding 36 as shown in FIG. 3(F).

Next, the upper substrate 4 is prepared (not shown). A method for preparing the upper substrate 4 is the same as the method used when the material of the lower substrate 1 is glass.

Finally, by laminating the lower substrate 1 and the upper substrate 4, an analysis chip of this example can be produced. A method for laminating the lower substrate 1 and the upper substrate 4 is the same as the method used when the material of the lower substrate 1 is glass. Although a production process was described in reference to FIG. 3, which shows cross sections corresponding to that shown in FIG. 1(C), the same production process can be applied to the cross section shown in FIG. 1(B).

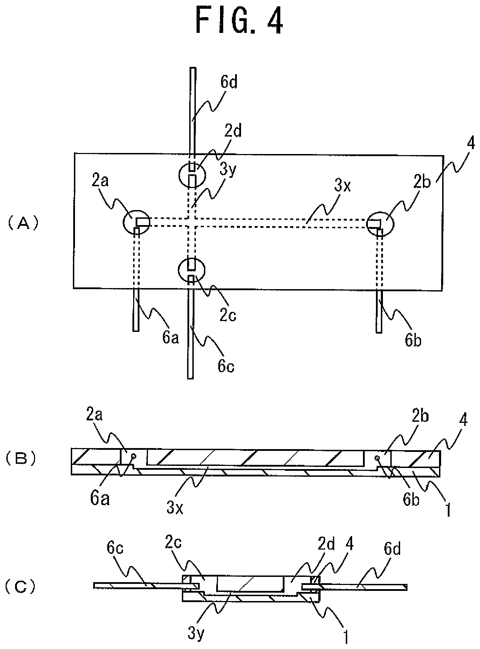

As described above, an analysis chip for use in the method of the present invention may further include a plurality of electrodes for use with a capillary electrophoresis method. FIG. 4 shows an analysis chip of this example in which the plurality of electrodes for use with a capillary electrophoresis method are provided. In FIG. 4, the portions that are identical to those in FIG. 1 are given the same numbers and symbols. As shown in FIG. 4, this analysis chip has four electrodes 6a to 6d for use with a capillary electrophoresis method. The four electrodes 6a to 6d for use with a capillary electrophoresis method are disposed such that their first ends are disposed in the plurality of fluid reservoirs 2a to 2d. The four electrodes 6a to 6d for use with a capillary electrophoresis method are embedded in the upper substrate 4. The four electrodes 6a to 6d for use with a capillary electrophoresis method can be readily disposed into position by creating, in advance, introduction holes for receiving the four electrodes 6a to 6d for use with a capillary electrophoresis method in side surfaces of the upper substrate 4 when producing the upper substrate 4. In an analysis chip for use in the method of the present invention, the plurality of electrodes are optional components. The plurality of electrodes may be inserted into the plurality of fluid reservoirs, for example, when the analysis chip is used.

The plurality of electrodes 6a to 6d for use with a capillary electrophoresis method may be any electrodes insofar as they are functional with an electrophoresis method. The plurality of electrodes 6a to 6d for use with a capillary electrophoresis method are each, for example, a stainless steel (SUS) electrode, a platinum (Pt) electrode, a gold (Au) electrode or the like.

An analysis chip for use in the method of the present invention further includes a pretreatment reservoir for hemolyzing and diluting a sample containing glycosylated hemoglobin and glucose. A hemolysis treatment for the sample is not particularly limited and, for example, it may be a treatment in which the sample is hemolyzed with a hemolytic agent. The hemolytic agent destroys, for example, the blood cell membrane of a blood cell component present in a sample that will be described below. Examples of hemolytic agents include the aforementioned electrophoresis running buffer, saponin, and "Triton X-100" (trade name) manufactured by Nacalai Tesque, Inc., among others, with the electrophoresis running buffer being particularly preferable. The pretreatment reservoir is in communication with an aforementioned introduction reservoir. The pretreatment reservoir may be formed in a suitable place such as at a place near an aforementioned fluid reservoir with which the pretreatment reservoir is in communication such as, for example, the second introduction reservoir 2c. When a pretreatment reservoir is provided, a sample that will be described below is introduced into the pretreatment reservoir. The sample thus pretreated is introduced, via a channel that connects the pretreatment reservoir and an aforementioned fluid reservoir that is in communication with the pretreatment reservoir such as, for example, the second introduction reservoir 2c, into the second introduction reservoir 2c. Moreover, when there is a pretreatment reservoir and glucose is analyzed by the electrode method, for example, the pretreatment reservoir in addition to, or in place of, the at least one reservoir (for example, the second introduction reservoir 2c) of the four fluid reservoirs 2a to 2d, may contain the electrodes (a cathode and an anode) for use with the electrode method and a glucose analysis reagent. When there is a pretreatment reservoir and glucose is analyzed using a reagent that develops a color in association with a redox reaction, for example, the pretreatment reservoir in addition to, or in place of, the at least one reservoir (for example, the second introduction reservoir 2c) of the four fluid reservoirs 2a to 2d may contain the glucose analysis reagent. The pretreatment reservoir may be configured such that two reservoirs, *i.e.,* a reservoir for hemolyzing the sample and a reservoir for diluting the sample, are in communication.

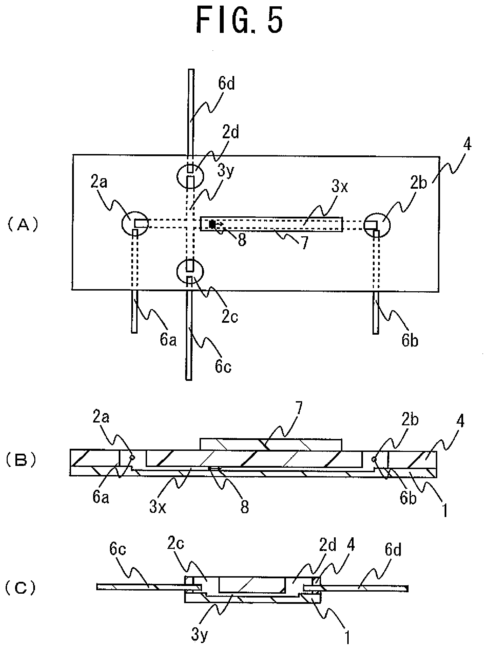

FIG. 5 shows an example of an analysis apparatus that includes an analysis chip of this example. In FIG. 5, the portions that are identical to those in FIG. 1 and FIG. 4 are given the same numbers and symbols. As shown in FIG. 5, this analysis apparatus includes an analysis unit 7. In an analysis apparatus of this example, the analysis unit 7 is a detector (line detector). The line detector is disposed on the upper substrate 4 such that the line detector is located over the capillary channel for sample analysis 3x on the first recovery reservoir 2b side relative to the intersection of the capillary channel for sample analysis 3x and the capillary channel for sample introduction 3y. A light source and a detection unit are housed in the line detector. The line detector emits light toward a sample from the light source and detects light reflected from the sample at the detection unit to measure absorbance. The analysis unit 7 is not limited to a line detector, and can be anything insofar as it can perform an analysis of glycosylated hemoglobin. The analysis unit 7 may be composed of, for example, a light source disposed under the analysis chip and a detection unit disposed in a place corresponding to where the line detector is disposed. In this case, light is emitted from the light source toward a sample, and light transmitted by the sample is detected at the detection unit to measure absorbance.

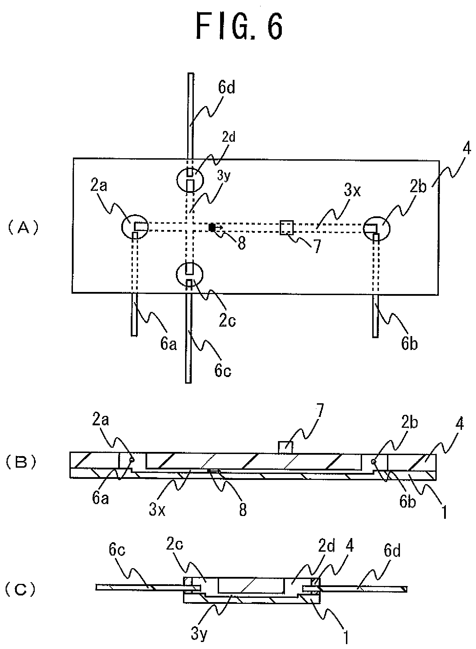

FIG. 6 shows another example of an analysis apparatus that includes an analysis chip of this example. In FIG. 6, the portions that are identical to those in FIG. 5 are given the same numbers and symbols. As shown in FIG. 6, the analysis apparatus of this example has the same configuration as the analysis apparatus shown in FIG. 5 except that the analysis unit 7 is different. As in this example, the analysis unit 7 may measure absorbance at one point.

Next, a method for analyzing glycosylated hemoglobin and glucose in connection with the present invention is described using as examples the cases where the analysis apparatus shown in FIG. 5 and FIG. 6 are used.

Analysis of glycosylated hemoglobin using an analysis apparatus (analysis chip) of this example is carried out by a capillary electrophoresis method. First, the capillary channel for sample analysis 3x and the capillary channel for sample introduction 3y are filled with an electrophoresis running buffer by pressure or capillary action. The electrophoresis running buffer is as described above.

When the capillary channels are filled with an electrophoresis running buffer in advance when the analysis apparatus is not in use (when not in analysis), it is possible to omit the step (described above) of filling with an electrophoresis running buffer and to advance immediately to the following steps, and it is thus preferable.

Next, a sample to be analyzed (a sample containing glycosylated hemoglobin and glucose) is introduced into the second introduction reservoir 2c. At this time, it is preferable to introduce a diluted sample that is diluted so as to have a volume ratio of the sample : the electrophoresis running buffer in a range of 1:4 to 1:99. That is, it is preferable that, in a method for analyzing glycosylated hemoglobin and glucose using an analysis chip (analysis apparatus), a diluted sample (prepared by diluting a sample containing glycosylated hemoglobin and glucose with an electrophoresis running buffer) is introduced into at least one reservoir among the plurality of fluid reservoirs, and the volume ratio of the sample : the electrophoresis running buffer is in a range of 1:4 to 1:99. However, the volume ratio is not limited to this. When an analysis apparatus (analysis chip) includes a pretreatment reservoir (not shown), a sample is introduced into the pretreatment reservoir and is pretreated therein. Next, a voltage is applied to the electrode for a capillary electrophoresis method 6c and the electrode for a capillary electrophoresis method 6d to generate a potential difference between both ends of the capillary channel for sample introduction 3y, thereby moving the sample to the intersection of the capillary channel for sample analysis 3x and the capillary channel for sample introduction 3y. Examples of a sample include whole blood, hemolyzed samples prepared by subjecting whole blood to a hemolysis treatment, centrifuged blood, spontaneously precipitated blood and like samples. Examples of hemolysis treatments include sonication treatments, freeze/thaw treatments, pressure treatments, osmotic pressure treatments, and surfactant treatments, among others. The hemolysis treatment may be performed in, for example, the pretreatment reservoir. The sample may be suitably diluted with, for example, water, physiological saline, or an electrophoresis running buffer, among others. This dilution is performed in the pretreatment reservoir. Moreover, a sample that has been subjected to a dilution treatment in advance in a separate apparatus or the like may be introduced into the analysis apparatus (analysis chip).

The potential difference between the electrode for a capillary electrophoresis method 6c and the electrode for a capillary electrophoresis method 6d is in a range of, for example, 0.5 to 5 kV.

Next, a voltage is applied to the electrode for a capillary electrophoresis method 6a and the electrode for a capillary electrophoresis method 6b to generate a potential difference between both ends of the capillary channel for sample analysis 3x. In this manner, by instantly shifting a capillary channel having different potentials at both ends from the capillary channel for sample introduction 3y to the capillary channel for sample analysis 3x, the sample 8 is moved toward the first recovery reservoir 2b side from the intersection of the capillary channel for sample analysis 3x and the capillary channel for sample introduction 3y as indicated by the arrows in FIG. 5 and FIG 6.

The potential difference between the electrode for a capillary electrophoresis method 6a and the electrode for a capillary electrophoresis method 6b is in a range of, for example, 0.5 to 5 kV.

Next, each component of a sample that is separated due to the differences in migration speed is detected with a detector 7. It is thus possible to analyze (separate and measure) each component of a sample. According to the present invention, it is possible to analyze (separate and measure) glycosylated hemoglobin and other components of a sample that contains hemoglobin (Hb) with high accuracy.

When an analysis apparatus (analysis chip) of this example analyzes glucose by, for example, an electrode method described above, the analysis of glucose is carried out using, for example, a measuring instrument (not shown) as follows. The measuring instrument includes a power source and an ammeter. First, electrodes (a cathode and an anode) for use with an electrode method are connected to the power source, and an ammeter is disposed between a power source and the electrodes. Next, a voltage is applied to the electrodes. Thereafter, an oxidation current value is measured when a sample reaches a reservoir in which the electrodes and the glucose analysis reagent are disposed. Finally, quantitative analysis of the glucose is performed based on the oxidation current value. The measuring instrument may be a part of an analysis apparatus (analysis chip) or may be a separate instrument.

When an analysis apparatus (analysis chip) of this example analyzes glucose by, for example, a method that uses the reagent (described above) that develops a color in association with a redox reaction, the analysis of glucose is carried out with, for example, a means that uses the optical measurement instrument described above. Specifically, the color development (change of color tone) of the glucose analysis reagent is measured when a sample reaches a reservoir in which the reagent is disposed, and quantitative analysis of the glucose is performed based on the extent of color development (change of color tone).

Moreover, it is also possible to simultaneously analyze glycosylated hemoglobin and glucose by a capillary electrophoresis method using an analysis apparatus (analysis chip) of this example. In this case, it is preferable (from an analysis accuracy point of view and the like), as described above, that the glucose is a derivative of glucose into which an ionic functional group has been introduced. The analysis of glucose in this case can be carried out in the same manner as in the analysis of glycosylated hemoglobin using a capillary electrophoresis method described above.

### Example 2

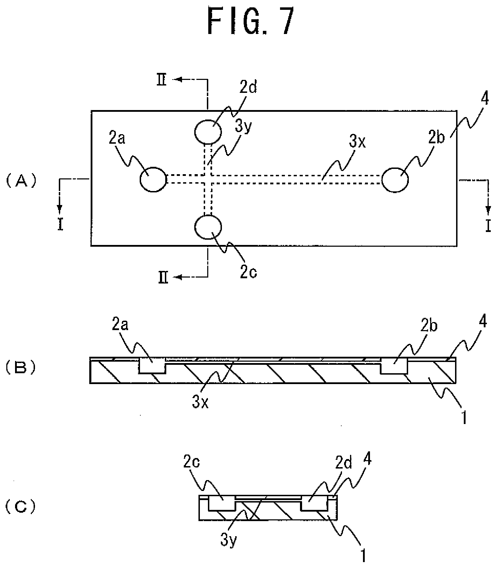

FIG. 7 shows an analysis chip of this example. In FIG. 7, the portions that are identical to those in FIG. 1 are given the same numbers and symbols. In an analysis chip of this example, a plurality of concave portions (four in this example) and a cross-shaped groove are formed in a substrate (lower substrate) 1. A surface of the substrate (lower substrate) 1 is sealed with a sealing material (upper substrate) 4 that has openings at places corresponding to the four concave portions. The four concave portions formed in the substrate (lower substrate) 1 serve as four fluid reservoirs 2a to 2d. By sealing the upper part of the cross-shaped groove formed in the substrate (lower substrate) 1 with the sealing material (upper substrate) 4, a capillary channel for sample analysis 3x and a capillary channel for sample introduction 3y are formed. Otherwise, an analysis chip of this example has the same configuration as the analysis chip shown in FIG. 1.

An analysis chip of this example can be produced, for example, as follows. However, the analysis chip may be produced by methods other than the production method described below.

For example, a substrate that is formed from the same material as the lower substrate 1 of the analysis chip shown in FIG. 1 can be used as the substrate (lower substrate) 1.

In an analysis chip of this example, the length and the width of the substrate (lower substrate) 1 correspond to the maximum length and the maximum width of the whole chip as described above. Therefore, the length and the width of the substrate (lower substrate) 1 are arranged to be identical to the maximum length and the maximum width of the whole chip as described above. The thickness of the substrate (lower substrate) 1 in an analysis chip of this example is in a range of, for example, 0.1 to 3 mm and preferably in a range of 1 to 2 mm.

The material of the sealing material (upper substrate) 4 is also not particularly limited and, for example, a substrate that is formed from the same material as the lower substrate 1 of the analysis chip shown in FIG. 1 can be used.

The length and the width of the sealing material (upper substrate) 4 are identical to the length and the width of the lower substrate 1, respectively. The thickness of the sealing material (upper substrate) 4 is in a range of, for example, 50 to 1000 µm and preferably in a range of 100 to 300 µm.

For example, a commercially available sealing material may be used for the sealing material (upper substrate) 4 after creating holes in places corresponding to the four concave portions (the four fluid reservoirs 2a to 2d).

In an analysis chip of this example, the maximum thickness of the whole chip is the sum of the thickness of the substrate (lower substrate) 1 and the thickness of the sealing material (upper substrate) 4. The maximum thickness of the whole chip is as described above.

An example of a process for producing an analysis chip of this example is described below. However, an analysis chip may be produced by processes other than the production process described below.

First, the substrate (lower substrate) 1 is prepared. A method for forming the capillary channel for sample analysis 3x and the capillary channel for sample introduction 3y in the substrate (lower substrate) 1 is not particularly limited, and the capillary channels may be formed, for example, in the same manner as in Example 1 above. A method for forming the four fluid reservoirs 2a to 2d in the substrate (lower substrate) 1 is also not particularly limited. For example, when the material of the substrate (lower substrate) 1 is glass, an example of a formation method is ultrasonic machining, or the like. For example, when the material of the substrate (lower substrate) 1 is a polymeric material, examples of a formation method include a cutting method; a molding method (such as injection molding, cast molding and press molding using a metal mold); and like methods. The four fluid reservoirs 2a to 2d may each be formed separately or may all be formed simultaneously. When the four fluid reservoirs 2a to 2d are formed separately, they may be formed in any order. Forming all four fluid reservoirs 2a to 2d simultaneously by an aforementioned method that uses a metal mold or a like method requires a small number of steps and is thus preferable.

Next, by sealing a surface of the substrate (lower substrate) 1 with the sealing material (upper substrate) 4 in which holes are created in places corresponding to the four concave portions (the four fluid reservoirs 2a to 2d), an analysis chip of this example can be produced.

The configuration of an analysis chip of this example is not limited to that shown in FIG. 7. For example, as in FIG. 4 and other figures, a plurality of electrodes may be included, and the above-described pretreatment reservoir or the like may suitably be included. The configuration of an analysis apparatus that uses an analysis chip of this example is also not particularly limited and, for example, a detector as in the analysis apparatus of FIG. 5 or FIG. 6 may be included. Moreover, a method for analyzing glycosylated hemoglobin and glucose that uses the analysis apparatus is also not particularly limited, and can be carried out, for example, in the same manner as with the case where the analysis apparatus shown in FIG. 5 or FIG. 6 is used.

### Example 3

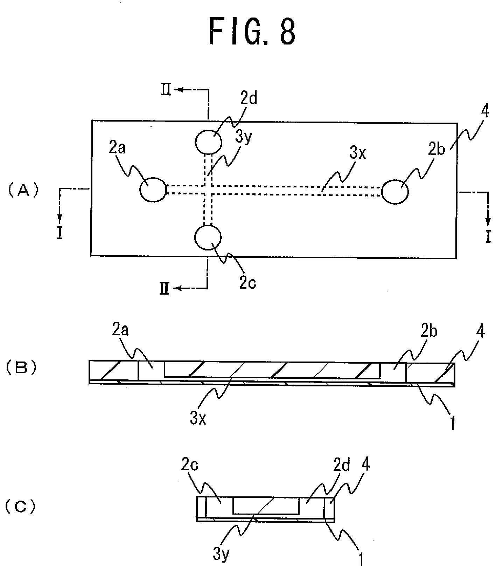

FIG. 8 shows an analysis chip of this example. In FIG. 8, the portions that are identical to those in FIG. 1 are given the same numbers and symbols. In an analysis chip of this example, a plurality of through-holes (four in this example) are formed in a substrate (upper substrate) 4. A cross-shaped groove is formed in the bottom surface of the substrate (upper substrate) 4. The bottom surface of the substrate (upper substrate) 4 is sealed with a sealing material (lower substrate) 1. The bottom parts of the four through-holes formed in the substrate (upper substrate) 4 are sealed with the sealing material (lower substrate) 1, and four fluid reservoirs 2a to 2d are formed thereby. By sealing the lower part of the cross-shaped groove formed in the substrate (upper substrate) with the sealing material, a capillary channel for sample analysis 3x and a capillary channel for sample introduction 3y are formed. Otherwise, an analysis chip of this example is of the same configuration as the analysis chip shown in FIG. 1.

An analysis chip of this example can be produced, for example, as follows. However, an analysis chip may be produced by methods other than the production method described below.

For example, a substrate that is formed from the same material as the lower substrate 1 of the analysis chip shown in FIG. 1 can be used as the substrate (upper substrate) 4.

In an analysis chip of this example, the length and the width of the substrate (upper substrate) 4 correspond to the maximum length and the maximum width of the whole chip as described above. Therefore, the length and the width of the substrate (upper substrate) 4 are arranged to be identical to the maximum length and the maximum width of the whole chip as described above. The thickness of the substrate (upper substrate) 4 in an analysis chip of this example is in a range of, for example, 0.1 to 3 mm and preferably in a range of 1 to 2 mm.

The material of the sealing material (lower substrate) 1 is also not particularly limited and, for example, a substrate that is formed from the same material as the lower substrate 1 of the analysis chip shown in FIG. 1 can be used.

The length and the width of the sealing material (lower substrate) 1 are identical to the length and the width of the substrate (upper substrate) 4, respectively. The thickness of the sealing material (upper substrate) 4 is in a range of, for example, 50 to 1000 µm and preferably in a range of 100 to 300 µm.

For example, a commercially available sealing material may be used for the sealing material (lower substrate) 1.

In an analysis chip of this example, the maximum thickness of the whole chip is the sum of the thickness of the substrate (upper substrate) 4 and the thickness of the sealing material (lower substrate) 1. The maximum thickness of the whole chip is as described above.

An example of a process for producing an analysis chip of this example is described below. However, an analysis chip may be produced by processes other than the production process described below.

First, the substrate (upper substrate) 4 is prepared. A method for forming the capillary channel for sample analysis 3x and the capillary channel for sample introduction 3y in the substrate (upper substrate) 4 is not particularly limited, and the capillary channels may be formed, for example, in the same manner as in Example 1 above. A method for forming the four through-holes in the substrate (upper substrate) 4 is also not particularly limited, and the through-holes may be formed, for example, in the same manner as in Example 1 above.

Next, by sealing the bottom surface of the substrate (upper substrate) 4 with the sealing material (lower substrate) 1, an analysis chip of this example can be produced.

The configuration of an analysis chip of this example is not limited to that shown in FIG. 8. For example, as in FIG. 4 and other figures, a plurality of electrodes for use with a capillary electrophoresis method may be included, and a pretreatment reservoir that will be described below and the like may suitably be included. The configuration of an analysis apparatus that uses an analysis chip of this example is also not particularly limited and, for example, a detector as in the analysis apparatus of FIG. 5 or FIG. 6 may be included. Moreover, a method for analyzing glycosylated hemoglobin that uses the analysis apparatus is also not particularly limited, and can be carried out, for example, in the same manner as with the case where the analysis apparatus shown in FIG. 5 or FIG. 6 is used.

### Example 4

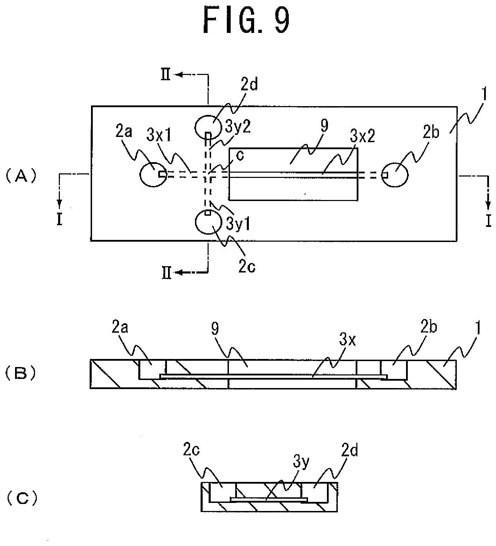

FIG. 9 shows an analysis chip of this example. In FIG. 9, the portions that are identical to those in FIG. 1 are given the same numbers and symbols. An analysis chip of this example has a single-piece substrate, and the plurality of fluid reservoirs are in communication with each other via capillary tubes that are members independent of the substrate. The capillary tubes are composed of four capillary tubes 3x1, 3x2, 3y1 and 3y2. One end of each of the four capillary tubes is gathered at the central portion c and connects with the others. As a result, the four capillary tubes communicate with each other internally. The substrate 1 is provided with cavities (not shown) for the insertion of four capillary tubes. The capillary tube 3x1 is inserted into the substrate 1 such that the other end thereof is located on the bottom surface of the first introduction reservoir 2a. The capillary tube 3x2 is inserted into the substrate 1 such that the other end thereof is located on the bottom surface of the first recovery reservoir 2b. The capillary tubes 3x1 and 3x2 serve as the capillary channel for sample analysis 3x. The capillary tube 3y1 is inserted into the substrate 1 such that the other end thereof is located on the bottom surface of the second introduction reservoir 2c. The capillary tube 3y2 is inserted into the substrate 1 such that the other end thereof is located on the bottom surface of the second recovery reservoir 2d. The capillary tubes 3y1 and 3y2 serve as the capillary channel for sample introduction 3y. The plurality of fluid reservoirs 2a to 2d are each formed as a concave portion in the substrate 1. The substrate 1 has a rectangular parallelepipedic opening (window) 9 on the first recovery reservoir 2b side relative to the capillary channel for sample introduction 3y. Otherwise, an analysis chip of this example is of the same configuration as the analysis chip shown in FIG. 1.

An analysis chip of this example can be produced, for example, as follows. However, an analysis chip may be produced by methods other than the production method described below.

For example, a substrate that is formed from the same material as the lower substrate 1 of the analysis chip shown in FIG. 1 can be used as the substrate 1.

In an analysis chip of this example, the length, the width and the thickness of the substrate 1 correspond to the maximum length, the maximum width and the maximum thickness of the whole chip, as described above. Therefore, the length, the width and the thickness of the substrate 1 are arranged to be identical to the maximum length, the maximum width and the thickness of the whole chip as described above.

The inner diameter of each of the four capillary tubes is the same as the maximum diameter of the capillary channel described above. The length of each of the four capillary tubes is determined according to the maximum length of the capillary channel for sample analysis 3x and the maximum length of the capillary channel for sample introduction 3y.

An example of a process for producing an analysis chip of this example is described below. However, an analysis chip may be produced by processes other than the production process described below.

First, the substrate 1 is prepared. A method for forming the four fluid reservoirs 2a to 2d and the opening (window) 9 in the substrate 1 is not particularly limited and, for example, the fluid reservoirs can be formed by the same method used for forming the four fluid reservoirs 2a to 2d of the analysis chip shown in FIG. 6. The fluid reservoirs 2a to 2d and the opening (window) 9 may each be formed separately or may all be formed simultaneously. When the four fluid reservoirs 2a to 2d and the opening (window) 9 are formed separately, they may be formed in any order. Forming all four fluid reservoirs 2a to 2d and the opening (window) 9 simultaneously by an aforementioned method that uses a metal mold or a like method requires a small number of steps and is thus preferable.

Next, the four capillary tubes are inserted into the substrate 1. In this manner, an analysis chip of this example can be obtained.

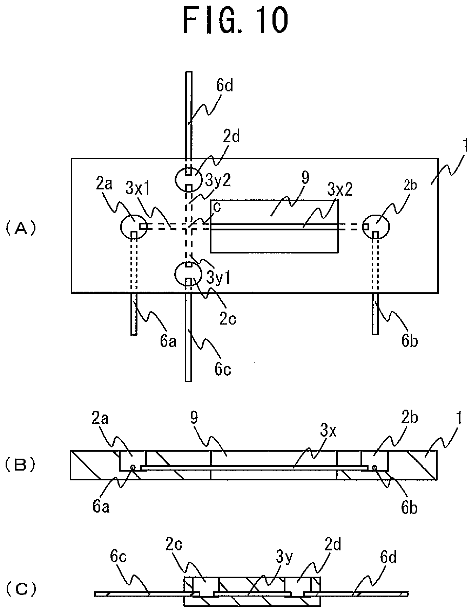

FIG. 10 shows an analysis chip of this example in which a plurality of electrodes for use with a capillary electrophoresis method are provided. In FIG. 10, the portions that are identical to those in FIG. 4 are given the same numbers and symbols. As shown in FIG. 10, in this analysis chip, the four electrodes for use with a capillary electrophoresis method 6a to 6d are embedded in the substrate 1. Otherwise, an analysis chip of this example is of the same configuration as the analysis chip shown in FIG. 4. The four electrodes 6a to 6d can be readily disposed into position by creating, in advance, introduction holes for receiving the four electrodes 6a to 6d in side surfaces of the substrate 1 when producing the upper substrate 1.

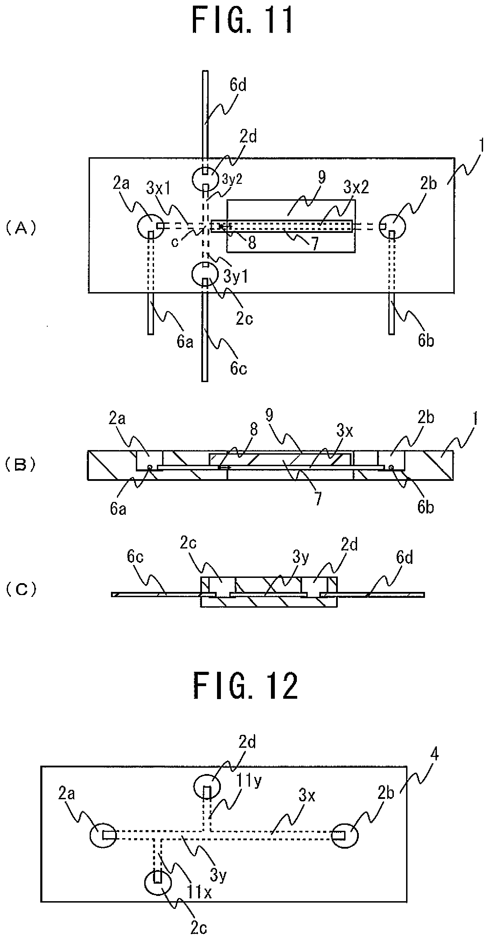

FIG. 11 shows an example of an analysis apparatus that includes an analysis chip of this example. In FIG. 11, the portions that are identical to those in FIG. 5 are given the same numbers and symbols. As shown in FIG. 11, an analysis unit (line detector) 7 is directly disposed on an aforementioned capillary tube in this analysis apparatus. Moreover, in this analysis apparatus, the substrate 1 is provided with, in addition to the cavities into which the four capillary tubes are to be inserted, a cavity into which the analysis unit (line detector) 7 is to be inserted (not shown). Otherwise, an analysis apparatus of this example has the same configuration as the analysis apparatus shown in FIG. 5. An analysis apparatus of this example is not limited by the configuration shown in FIG. 11 and, for example, a detector as in the analysis apparatus of FIG. 6 may be included. An analysis of glycosylated hemoglobin and glucose using an analysis apparatus of this example can be carried out also in the same manner as with the case where the analysis apparatus shown in FIG. 5 or FIG. 6 is used.

### Example 5

FIG. 12 shows an analysis chip of this example. In FIG. 12, the portions that are identical to those in FIG. 1 are given the same numbers and symbols. FIG. 12 is a plan view of an analysis chip of this example. As shown in FIG. 12, in this analysis chip, a groove having a shape of two "T"s combined is formed in place of a cross-shaped groove in the lower substrate 1 (not shown) and, thereby, a capillary channel for sample analysis 3x and a capillary channel for sample introduction 3y are formed. That is, first, the capillary channel for sample analysis 3x is linear, and the first introduction reservoir 2a and the first recovery reservoir 2b are in communication with each other via the capillary channel for sample analysis 3x. A first branching channel 11x branches off from a part of the capillary channel for sample analysis 3x. The first branching channel 11x is in communication with the second introduction reservoir 2c. A second branching channel 11y branches off from a part of the capillary channel for sample analysis 3x that is located on the downstream side (right-hand side on FIG. 12) relative to the first branching channel 11x. The second branching channel 11y is in communication with the second recovery reservoir 2d. The capillary channel for sample introduction 3y is formed by the first branching channel 11x, the second branching channel 11y and the part of the capillary channel for sample analysis 3x that connects the branching channels. The first branching channel 11x and the second branching channel 11y are substantially perpendicular to the capillary channel for sample analysis 3x and form together with the capillary channel for sample analysis 3x a groove having a shape of two "T"s combined. Otherwise, an analysis chip of this example is of the same configuration as the analysis chip shown in FIG. 1.

The configuration of an analysis chip of this example is not limited to the configuration shown in FIG. 12. For example, an analysis chip may be composed of a single-piece substrate as shown in FIG. 8. Moreover, an analysis chip may be provided with a plurality of electrodes for use with a capillary electrophoresis method as shown in FIG. 4 and FIG. 10 and may be suitably provided with a pretreatment reservoir as described above. A method for producing an analysis chip of this example is also not particularly limited, and may be identical to, for example, the production methods described in Examples 1 to 4 above. The configuration of an analysis apparatus that uses an analysis chip of this example is also not particularly limited and, for example, a detector as in the analysis apparatus of FIG. 5, FIG. 6, or FIG. 11 may be provided therein. Moreover, a method for analyzing glycosylated hemoglobin and glucose using the analysis apparatus is also not particularly limited, and can be carried out, for example, in the same manner as with the case where the analysis apparatus shown in FIG. 5, FIG. 6, or FIG. 11 is used.

### Example 6

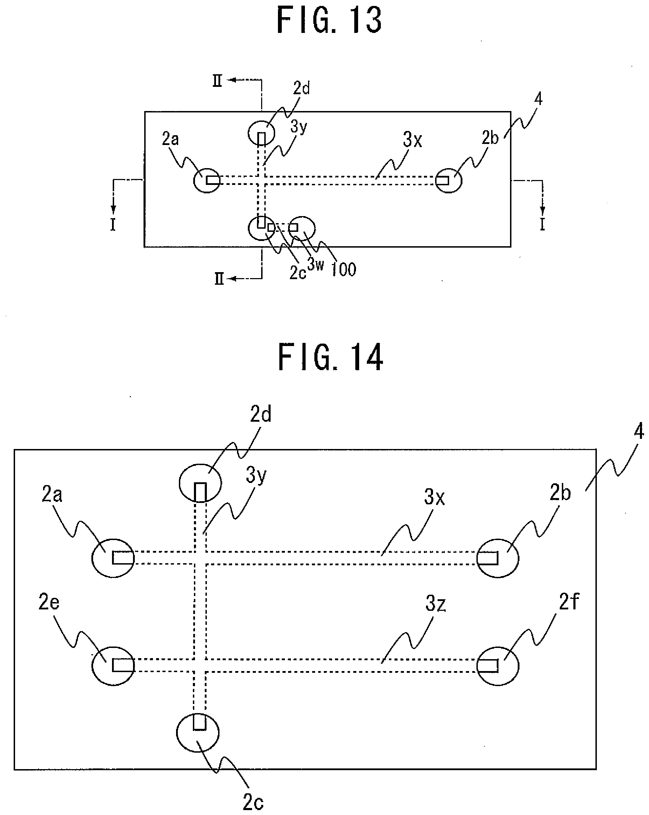

FIG. 13 shows an analysis chip of this example. In FIG. 13, the portions that are identical to those in FIG. 1 are given the same numbers and symbols. FIG. 13 is a plan view of an analysis chip of this example. In an analysis chip of this example, glucose is analyzed using a reagent as described above that develops a color in association with a redox reaction. As shown in FIG. 13, this analysis chip has a reagent reservoir 100 that is formed near the second introduction reservoir 2c. The reagent reservoir 100 is formed by sealing the bottom part of a through-hole formed in the upper substrate 4 with the lower substrate 1. The reagent reservoir 100 is in communication with the second introduction reservoir 2c via a channel 3w that is independent of the capillary channel for sample analysis 3x and the capillary channel for sample introduction 3y. The reagent reservoir 100 contains a reagent that develops a color in association with a redox reaction. The reagent reservoir 100 may include, for example, electrodes for use with a capillary electrophoresis method and the like. Otherwise, an analysis chip of this example is of the same configuration as the analysis chip shown in FIG. 1.

The configuration of an analysis chip of this example is not limited to that shown in FIG. 13. For example, an analysis chip may be composed of a single-piece substrate as in FIG. 9. Moreover, an analysis chip may be provided with a plurality of electrodes for use with a capillary electrophoresis method as in FIG. 4 and FIG. 10 and may be suitably provided with a pretreatment reservoir as described above. A method for producing an analysis chip of this example is also not particularly limited, and may be identical to, for example, the production methods described in Examples 1 to 4 above. The configuration of an analysis apparatus that uses an analysis chip of this example is also not particularly limited and, for example, a detector as in the analysis apparatus of FIG. 5, FIG. 6, or FIG. 11 may be included.

Furthermore, a method for analyzing glycosylated hemoglobin and glucose using the analysis apparatus is also not particularly limited, and is carried out, for example, as follows. That is, first, a sample is introduced into the second introduction reservoir 2c in the same manner as in the case where the analysis apparatus of FIG. 5, FIG. 6, or FIG. 11 is used. When there is a pretreatment reservoir as described above, the sample may be introduced thereinto. Then, the sample is moved into the reagent reservoir 100, and the glucose is analyzed there. A method for moving the sample into the reagent reservoir 100 is not particularly limited and, for example, the sample may be moved by applying a voltage to the electrodes for use with a capillary electrophoresis method provided in the reagent reservoir 100. The method for analyzing glucose is not particularly limited and, for example, an analysis can be carried out in the same manner as in the case where the analysis apparatus shown in FIG. 5, FIG. 6, or FIG. 11 is used. Thereafter, a potential difference between both ends of the capillary channel for sample introduction 3y is created in the same manner as in the case where the analysis apparatus of FIG. 5, FIG. 6, or FIG. 11 is used, and it is thus possible to analyze glycosylated hemoglobin.

### Example 7

FIG. 14 shows an analysis chip of this example. In an analysis chip of this example, the glucose is analyzed by a capillary electrophoresis method. In FIG. 14, the portions that are identical to those in FIG. 1 are given the same numbers and symbols. FIG. 14 is a plan view of an analysis chip of this example. As shown in FIG. 14, this analysis chip further includes a third introduction reservoir 2e and a third recovery reservoir 2f, and these reservoirs are in communication with each other via a capillary channel for glucose analysis 3z. The third introduction reservoir 2e and the third recovery reservoir 2f are, as with the other four fluid reservoirs, formed by sealing the bottom parts of through-holes formed in the upper substrate 4 with the lower substrate 1. The capillary channel for glucose analysis 3z, as with the other two capillary channels, is formed by sealing the upper part of a groove formed in the lower substrate 1 with the upper substrate 4. The capillary channel for glucose analysis 3z is disposed parallel to the capillary channel for sample analysis 3x, intersects with the capillary channel for sample introduction 3y, and is in communication with the capillary channel for sample introduction 3y at the intersection. Moreover, the capillary channel for glucose analysis 3z is formed nearer the introduction reservoir 2c in relation to the capillary channel for sample analysis 3x. Otherwise, an analysis chip of this example is of the same configuration as the analysis chip shown in FIG. 1.

The configuration of an analysis chip of this example is not limited to that shown in FIG. 14. For example, an analysis chip may be composed of a single-piece substrate as in FIG. 9. Moreover, an analysis chip may be provided with a plurality of electrodes for use with a capillary electrophoresis method as in FIG. 4 and FIG. 10 and may be suitably provided with a pretreatment reservoir as described above. Furthermore, for example, the capillary channel for glucose analysis 3z and the capillary channel for sample analysis 3x may be disposed inversely. That is, the capillary channel for glucose analysis 3z may be formed nearer the second recovery reservoir 2d in relation to the capillary channel for sample analysis 3x. A method for producing an analysis chip of this example is also not particularly limited, and may be identical to, for example, the production methods described in Examples 1 to 4 above.

The configuration of an analysis apparatus that uses an analysis chip of this example is also not particularly limited. For example, the third introduction reservoir 2e and the third recovery reservoir 2f may include electrodes for use with a capillary electrophoresis method (not shown) as with the other four fluid reservoirs. Moreover, the capillary channel for glucose analysis 3z may include a suitable glucose detector. The glucose detector is not particularly limited, and it may be, for example, a detector that analyzes glucose by indirect absorption spectroscopy (indirect UV detection method) or a like detector. The structure thereof is also not particularly limited, and the detector may be identical to the analysis unit 7 in the analysis apparatus of FIG. 5, FIG. 6, or FIG. 11. Otherwise, the configuration of an analysis apparatus of this example may be identical to that of the analysis apparatus of FIG. 5, FIG. 6, or FIG. 11. A method for analyzing glycosylated hemoglobin and glucose using this analysis apparatus is also not particularly limited. It may be identical to an analysis method using the analysis apparatus of FIG. 5, FIG. 6, or FIG. 11 except that a voltage is applied to both ends of the capillary channel for glucose analysis 3z and the glucose is analyzed by the glucose detector.

According to the present invention, an accurate blood sugar status can be obtained by, for example, analyzing glycosylated hemoglobin and glucose with high accuracy. It is thus possible to carry out a specific diabetic treatment for the purpose of preventing diabetic complications. Moreover, an analysis chip and an analysis apparatus for use in the method of the present invention can be introduced into small-scale hospitals and the like due to the small size and the low cost of the apparatus. An analysis chip and an analysis apparatus for use in the method of the present invention has a simple configuration and permits analysis to be carried out conveniently. For example, by making the analysis chip a disposable device, post-processing is eliminated, and the operation is thus more convenient. Furthermore, due to the fact that the apparatus is small and the analysis time is short, it is possible, for example, to provide an immediate diagnosis (the result of an analysis) in front of a patient.

### Industrial Applicability

An analysis chip for use in the method of the present invention enables an apparatus to be small, analysis to be simple, analysis time to be short, and analysis of glycosylated hemoglobin and glucose to be highly accurate. An analysis chip for use in the method of the present invention is applicable to all technical fields where glycosylated hemoglobin and glucose are analyzed, such as laboratory tests, biochemical examinations and medical research. The intended use of the analysis chip is
not limited and it is applicable to a broad range of technical fields.

## Claims

1. A method capable of analyzing a sample containing both glycosylated hemoglobin and glucose using an analysis chip,
wherein the method comprises analyzing glycosylated hemoglobin, and analyzing glucose, and wherein the glycosylated hemoglobin is analyzed by a capillary electrophoresis method,
the analysis chip comprising:
a substrate (1,4), a plurality of fluid reservoirs (2a, 2b, 2c, 2d), a capillary channel for the capillary electrophoresis method (3x, 3y), and a glucose analysis reagent,
the plurality of fluid reservoirs (2a, 2b, 2c, 2d) comprising a first introduction reservoir (2a) and a first recovery reservoir (2b),
the capillary channel (3x, 3y) comprising a capillary channel for sample analysis (3x),
the first introduction reservoir (2a) and the first recovery reservoir (2b) being formed in the substrate (1, 4), and
the first introduction reservoir (2a) and the first recovery reservoir (2b) being in communication with each other via the capillary channel for sample analysis (3x);
wherein the analysis chip further comprises a pretreatment reservoir for hemolyzing and diluting the sample, the pretreatment reservoir being in communication with the first introduction reservoir (2a),
and wherein:
A) the glucose analysis reagent is contained in the pretreatment reservoir; and/or
B) the analysis chip further comprises a reagent reservoir (100), the glucose analysis reagent being contained in the reagent reservoir (100), the reagent reservoir (100) being in communication with the first introduction reservoir (2a) via a channel that is independent of the capillary channel for sample analysis (3x), or being in communication with the pretreatment reservoir,
wherein the method includes:
filling the capillary channels (3x, 3y) with an electrophoresis running buffer by pressure or capillary action;
introducing the sample into the pretreatment reservoir and hemolizing and diluting said sample therein;
analysing glucose of the sample by reacting the sample with the glucose reagent;
moving the sample into the capillary channel (3x) for sample analysis;
and analysing glycosylated haemoglobin of the sample by capillary electrophoresis.

2. A method capable of analyzing both glycosylated hemoglobin and glucose according to claim 1, wherein
the plurality of fluid reservoirs (2a, 2b, 2c, 2d) further comprises a second introduction reservoir (2c) and a second recovery reservoir (2d),
the capillary channel (3x, 3y) further comprises a capillary channel for sample introduction (3y),
the second introduction reservoir (2c) and the second recovery reservoir (2d) are formed in the substrate (1, 4),
the second introduction reservoir (2c) and the second recovery reservoir (2d) are in communication with each other via the capillary channel for sample introduction (3y),
the capillary channel for sample analysis (3x) and the capillary channel for sample introduction (3y) intersect, and
the capillary channel for sample analysis (3x) and the capillary channel for sample introduction (3y) are in communication with each other at the intersection.

3. A method capable of analyzing both glycosylated hemoglobin and glucose according to claim 1, wherein
a first branching channel (11x) branches off from a part of the capillary channel for sample analysis (3x),
the first branching channel (11x) is in communication with the second introduction reservoir (2c),
a second branching channel (11y) branches off from a part of the capillary channel for sample analysis (3x) that is located on the first recovery reservoir (2b) side relative to the first branching channel (11x),
the second branching channel (11y) is in communication with the second recovery reservoir (2d), and
the capillary channel for sample introduction (3y) is formed by the first branching channel (11x), the second branching channel (11y), and a part of the capillary channel for sample analysis (3x) that connects the branching channels; and
the capillary channel for sample introduction (3x) is a linear channel.

4. A method capable of analyzing both glycosylated hemoglobin and glucose according to claim 1, having a maximum length of the whole chip in a range of 10 to 100 mm, a maximum width of the whole chip in a range of 10 to 60 mm, and a maximum thickness of the whole chip in a range of 0.3 to 5 mm.

5. A method capable of analyzing both glycosylated hemoglobin and glucose according to claim 1, comprising preparing a diluted sample by diluting a sample containing the glycosylated hemoglobin and glucose with an electrophoresis running buffer, and introducing the diluted sample into the first introduction reservoir (2a), wherein a volume ratio of the sample: the electrophoresis running buffer is 1-4 to 1-99.

6. A method capable of analyzing both glycosylated hemoglobin and glucose according to claim 1,
wherein the capillary channel (3x, 3y) has a maximum diameter in a range of 10 to 200 µm and a maximum length of 0.5 to 15 cm.

7. A method capable of analyzing both glycosylated hemoglobin and glucose according to claim 1,
wherein the analysis chip further comprises an electrode for use with an electrode method,
the electrode for use with an electrode method being disposed in the same reservoir as the glucose analysis reagent, and
glucose being analyzed according to an electrode method using the electrode for use with an electrode method and the glucose analysis reagent.

8. A method capable of analyzing both glycosylated hemoglobin and glucose according to claim 1, wherein
the substrate (1, 4) comprises an upper substrate (4) and a lower substrate (1),
a plurality of through-holes are formed in the upper substrate (4),
a groove is formed in the lower substrate (1),
the upper substrate (4) is laminated onto the lower substrate (1),
spaces created by sealing the bottom parts of the plurality of through-holes formed in the upper substrate (4) with the lower substrate (1) serve as the plurality of fluid reservoirs (2a, 2b, 2c, 2d), and
a space created by sealing the upper part of the groove formed in the lower substrate (1) with the upper substrate (4) serves as the capillary channel (3x, 3y).

9. A method capable of analyzing both glycosylated hemoglobin and glucose according to claim 1, wherein
a plurality of concave portions and a groove are formed in the substrate (1),
a surface of the substrate (1) is sealed with a sealing material (4) that has openings at places corresponding to the plurality of concave portions,
the plurality of concave portions formed in the substrate (1) serve as the plurality of fluid reservoirs (2a, 2b, 2c, 2d), and
a space created by sealing the upper part of the groove formed in the substrate (1) with the sealing material (4) serves as the capillary channel (3x, 3y).

10. A method capable of analyzing both glycosylated hemoglobin and glucose according to claim 1, wherein
a sealing material (1) is further included,
a plurality of through-holes are formed in the substrate (4),
a groove is formed in the bottom surface of the substrate (4),
the bottom surface of the substrate (4) is sealed with the sealing material (1),
spaces created by sealing the bottom parts of the plurality of through-holes formed in the substrate (4) with the sealing material (1) serve as the plurality of fluid reservoirs (2a, 2b, 2c, 2d), and
a space created by sealing the lower part of the groove formed in the bottom surface of the substrate (4) with the sealing material (1) serves as the capillary channel (3x, 3y).

11. A method capable of analyzing both glycosylated hemoglobin and glucose according to claim 1, wherein the plurality of fluid reservoirs (2a, 2b, 2c, 2d) are in communication with each other via a capillary tube (3x1, 3x2, 3y1, 3y2) that is a member independent of the substrate (1), and the capillary tube (3x1, 3x2, 3yl, 3y2) serves as the capillary channel (3x, 3y), or
wherein the plurality of fluid reservoirs (2a, 2b, 2c, 2d) each has a volume in a range of 1 to 1000 mm³, or
wherein the analysis chip further comprises a plurality of electrodes (6a, 6b, 6c, 6d) for use with a capillary electrophoresis method,
wherein the plurality of electrodes (6a, 6b, 6c, 6d) for use with a capillary electrophoresis method are disposed such that their one ends are disposed respectively in the plurality of fluid reservoirs (2a, 2b, 2c, 2d).

12. A method capable of analyzing both glycosylated hemoglobin and glucose according to claim 1, wherein the analysis chip belongs to an analysis apparatus and wherein the analysis apparatus further comprises an analysis unit (7).

## Patentansprüche

1. Verfahren, welches in der Lage ist, unter Verwendung eines Analysechips eine Probe zu analysieren, die sowohl glykosyliertes Hämoglobin als auch Glukose enthält,
wobei das Verfahren Analysieren von glykosyliertem Hämoglobin und Analysieren von Glukose umfasst, und wobei das glykosylierte Hämoglobin durch ein Kapillarelektrophoreseverfahren analysiert wird,
wobei der Analysechip umfasst:
ein Substrat (1, 4), eine Vielzahl von Fluidreservoirs (2a, 2b, 2c, 2d), einen Kapillarkanal für das Kapillarelektrophoreseverfahren (3x, 3y) und ein Glukoseanalysereagenz,
wobei die Vielzahl von Fluidreservoirs (2a, 2b, 2c, 2d) ein erstes Einführungsreservoir (2a) und ein erstes Rückgewinnnungsreservoir (2b) umfassen,
wobei der Kapillarkanal (3x, 3y) einen Kapillarkanal zur Probenanalyse (3x) umfasst,
wobei das erste Einführungsreservoir (2a) und das erste Rückgewinnungsreservoir (2b) in dem Substrat (1, 4) ausgebildet sind, und
das erste Einführungsreservoir (2a) und das erste Rückgewinnungsreservoir (2b) über den Kapillarkanal zur Probenanalyse (3x) miteinander in Verbindung stehen;
wobei der Analysechip ferner ein Vorbehandlungsreservoir zum Hämolysieren und Verdünnen der Probe umfasst, wobei das Vorbehandlungsreservoir mit dem ersten Einführungsreservoir (2a) in Verbindung steht,
und wobei:
A) das Glukoseanalysereagenz in dem Vorbehandlungsreservoir enthalten ist; und/oder
B) der Analysechip ferner ein Reagenzreservoir (100) umfasst, wobei das Glukoseanalysereagenz in dem Reagenzreservoir (100) enthalten ist, wobei das Reagenzreservoir (100) mit dem ersten Einführungsreservoir (2a) über einen Kanal, der von dem Kapillarkanal zur Probenanalyse (3x) unabhängig ist, in Verbindung steht, oder mit dem Vorbehandlungsreservoir in Verbindung steht,
wobei das Verfahren beinhaltet:
Füllen der Kapillarkanäle (3x, 3y) mit einem Elektrophoreselaufpuffer durch Druck oder Kapillarwirkung;
Einführen der Probe in das Vorbehandlungsreservoir und Hämolysieren und Verdünnen der Probe darin;
Analysieren von Glukose der Probe durch Reagieren der Probe mit dem Glukosereagenz;
Überführen der Probe in den Kapillarkanal (3x) zur Probenanalyse;
und Analysieren von glykosyliertem Hämoglobin der Probe durch Kapillarelektrophorese.

2. Verfahren, welches in der Lage ist, sowohl glykosyliertes Hämoglobin als auch Glukose zu analysieren, nach Anspruch 1, wobei
die Vielzahl von Fluidreservoirs (2a, 2b, 2c, 2d) weiter ein zweites Einführungsreservoir (2c) und ein zweites Rückgewinnnungsreservoir (2d) umfassen,
der Kapillarkanal (3x, 3y) weiter einen Kapillarkanal zur Probeneinführung (3y) umfasst,
das zweite Einführungsreservoir (2c) und das zweite Rückgewinnungsreservoir (2d) in dem Substrat (1, 4) ausgebildet sind, und
das zweite Einführungsreservoir (2c) und das zweite Rückgewinnungsreservoir (2d) über den Kapillarkanal zur Probeneinführung (3y) miteinander in Verbindung stehen;
der Kapillarkanal zur Probenanalyse (3x) und der Kapillarkanal zur Probeneinführung (3y) sich schneiden, und
der Kapillarkanal zur Probenanalyse (3x) und der Kapillarkanal zur Probeneinführung (3y) an der Schnittstelle miteinander in Verbindung stehen.

3. Verfahren, welches in der Lage ist, sowohl glykosyliertes Hämoglobin als auch Glukose zu analysieren, nach Anspruch 1, wobei
ein erster Verzweigungskanal (11x) von einem Teil des Kapillarkanals zur Probenanalyse (3x) abzweigt,
der erste Verzweigungskanal (11x) mit dem zweiten Einführungsreservoir (2c) in Verbindung steht,
ein zweiter Verzeigungskanal (11y) von einem Teil des Kapillarkanals zur Probenanalyse (3x) abzweigt, welcher auf der Seite des ersten Rückgewinnungsreservoirs (2b) relativ zu dem ersten Verzweigungskanal (11x) angeordnet ist,
der zweite Verzweigungskanal (11y) mit dem zweiten Rückgewinnungsreservoir (2d) in Verbindung steht, und
der Kapillarkanal zur Probeneinführung (3y) von dem ersten Verzweigungskanal (11x), dem zweiten Verzweigungskanal (11y) und einem Teil des Kapillarkanals zur Probenanalyse (3x) ausgebildet ist, welcher die Verzeigungskanäle verbindet, und
der Kapillarkanal zur Probeneinführung (3x) ein linearer Kanal ist.

4. Verfahren, welches in der Lage ist, sowohl glykosyliertes Hämoglobin als auch Glukose zu analysieren, nach Anspruch 1, mit einer maximalen Länge des Gesamtchips in einem Bereich von 10 bis 100 mm, einer maximalen Breite des Gesamtchips im Bereich von 10 bis 60 mm und einer maximalen Dicke des Gesamtchips in einem Bereich von 0,3 bis 5 mm.

5. Verfahren, welches in der Lage ist, sowohl glykosyliertes Hämoglobin als auch Glukose zu analysieren, nach Anspruch 1, Herstellen einer verdünnten Probe durch Verdünnen einer Probe, welche das glykosylierte Hämoglobin und Glukose mit einem Elektrophoreselaufpuffer enthält, und Einführen der verdünnten Probe in das erste Einführungsreservoir (2a) umfassend, wobei ein Volumenverhältnis von Probe: Elektrophoreselaufpuffer 1-4 bis 1-99 ist.

6. Verfahren, welches in der Lage ist, sowohl glykosyliertes Hämoglobin als auch Glukose zu analysieren, nach Anspruch 1,
wobei der Kapillarkanal (3x, 3y) einen maximalen Durchmesser in einem Bereich von 10 bis 200 µm und eine maximale Länge von 0,5 bis 15 cm aufweist.

7. Verfahren, welches in der Lage ist, sowohl glykosyliertes Hämoglobin als auch Glukose zu analysieren, nach Anspruch 1,
wobei der Analysechip weiter eine Elektrode zur Verwendung mit einem Elektrodenverfahren umfasst,
die Elektrode zur Verwendung mit einem Elektrodenverfahren in demselben Reservoir wie das Glukoseanalysereagenz angeordnet ist, und
Glukose nach einem Elektrodenverfahren unter Verwendung der Elektrode zur Verwendung mit einem Elektrodenverfahren und dem Glukoseanalysereagenz analysiert wird.

8. Verfahren, welches in der Lage ist, sowohl glykosyliertes Hämoglobin als auch Glukose zu analysieren, nach Anspruch 1, wobei
das Substrat (1, 4) ein oberes Substrat (4) und ein unteres Substrat (1) umfasst,
eine Vielzahl von Durchgangsbohrungen in dem oberen Substrat (4) ausgebildet sind,
eine Spur in dem unteren Substrat (1) ausgebildet ist,
das obere Substrat (4) auf das untere Substrat (1) laminiert ist, Räume, die durch Abdichten der Bodenabschnitte der Vielzahl von Durchgangsbohrungen, die in dem oberen Substrat (4) ausgebildet sind, mit dem unteren Substrat (1) geschaffen werden, als die Vielzahl von Fluidreservoirs (2a, 2b, 2c, 2d) dienen, und
ein Raum, der durch Abdichten des oberen Teils der Spur, die in dem unteren Substrat (1) ausgebildet ist, mit dem oberen Substrat (4) geschaffen wird, als der Kapillarkanal (3x, 3y) dient.

9. Verfahren, welches in der Lage ist, sowohl glykosyliertes Hämoglobin als auch Glukose zu analysieren, nach Anspruch 1, wobei
eine Vielzahl von konkaven Abschnitten und eine Spur in dem Substrat (1) ausgebildet sind,
eine Oberfläche des Substrats (1) mit einem Abdichtungsmaterial (4) abgedichtet wird, das Öffnungen an Stellen aufweist, die der Vielzahl von konkaven Abschnitten entsprechen,
die Vielzahl von konkaven Abschnitten, die in dem Substrat (1) ausgebildet sind, als die Vielzahl von Fluidreservoirs (2a, 2b, 2c, 2d) dienen, und
ein Raum, der durch Abdichten des oberen Teils der Spur, die in dem Substrat (1) ausgebildet ist, mit dem Dichtungsmaterial (4) geschaffen wird, als der Kapillarkanal (3x, 3y) dient.

10. Verfahren, welches in der Lage ist, sowohl glykosyliertes Hämoglobin als auch Glukose zu analysieren, nach Anspruch 1, wobei
weiter ein Dichtungsmaterial (1) beinhaltet ist,
eine Vielzahl von Durchgangsbohrungen in dem Substrat (4) ausgebildet sind,
eine Spur in der Bodenfläche des Substrats (4) ausgebildet ist,
die Bodenfläche des Substrats (4) mit dem Dichtungsmaterial (1) abgedichtet ist, Räume, die durch Abdichten der Bodenabschnitte der Vielzahl von Durchgangsbohrungen, die in dem Substrat (4) ausgebildet sind, mit dem Dichtungsmaterial (1) geschaffen werden, als die Vielzahl von Fluidreservoirs (2a, 2b, 2c, 2d) dienen,
ein Raum, der durch Abdichten des unteren Teils der Spur, die in der Bodenfläche des Substrats (4) ausgebildet ist, mit dem Dichtungsmaterial (1) geschaffen wird, als der Kapillarkanal (3x, 3y) dient.

11. Verfahren, welches in der Lage ist, sowohl glykosyliertes Hämoglobin als auch Glukose zu analysieren, nach Anspruch 1, wobei die Vielzahl von Fluidreservoirs (2a, 2b, 2c, 2d) über ein Kapillarröhrchen (3x1, 3x2, 3y1, 3y2), das ein von dem Substrat (1) unabhängiger Bestandteil ist, miteinander in Verbindung stehen, und das Kapillarröhrchen (3x1, 3x2, 3y1, 3y2) als der Kapillarkanal (3x, 3y) dient, oder
wobei die Vielzahl von Fluidreservoirs (2a, 2b, 2c, 2d) jeweils ein Volumen im Bereich von 1 bis 1.000 mm³ aufweisen, oder
wobei der Analysechip ferner eine Vielzahl von Elektroden (6a, 6b, 6c, 6d) zur Verwendung mit einem Kapillarelektrophoreseverfahren umfasst,
wobei die Vielzahl von Elektroden (6a, 6b, 6c, 6d) zur Verwendung mit einem Kapillarelektrophoreseverfahren angeordnet sind, sodass ihre einen Enden jeweils in der Vielzahl von Fluidreservoiren (2a, 2b, 2c, 2d) angeordnet sind.

12. Verfahren, welches in der Lage ist, sowohl glykosyliertes Hämoglobin als auch Glukose zu analysieren, nach Anspruch 1, wobei der Analysechip zu einer Analysevorrichtung gehört und wobei die Analysevorrichtung ferner eine Analyseeinheit (7) umfasst.

## Revendications

1. Procédé capable d'analyser un échantillon contenant à la fois de l'hémoglobine glycosylée et du glucose à l'aide d'une puce d'analyse,
dans lequel le procédé comprend l'analyse d'hémoglobine glycosylée, et l'analyse de glucose, et dans lequel l'hémoglobine glycosylée est analysée par un procédé d'électrophorèse capillaire,
la puce d'analyse comprenant :
un substrat (1, 4), une pluralité de réservoirs de fluide (2a, 2b, 2c, 2d), un canal capillaire pour le procédé d'électrophorèse capillaire (3x, 3y), et un réactif d'analyse de glucose,
la pluralité de réservoirs de fluide (2a, 2b, 2c, 2d) comprenant un premier réservoir d'introduction (2a) et un premier réservoir de récupération (2b),
le canal capillaire (3x, 3y) comprenant un canal capillaire pour analyse d'échantillon (3x),
le premier réservoir d'introduction (2a) et le premier réservoir de récupération (2b) étant formés dans le substrat (1, 4), et
le premier réservoir d'introduction (2a) et le premier réservoir de récupération (2b) étant en communication l'un avec l'autre via le canal capillaire pour analyse d'échantillon (3x) ;
dans lequel la puce d'analyse comprend en outre un réservoir de pré-traitement pour l'hémolyse et la dilution de l'échantillon, le réservoir de pré-traitement étant en communication avec le premier réservoir d'introduction (2a),
et dans lequel :
A) le réactif d'analyse de glucose est contenu dans le réservoir de pré-traitement ; et/ou
B) la puce d'analyse comprend en outre un réservoir de réactif (100), le réactif d'analyse de glucose étant contenu dans le réservoir de réactif (100), le réservoir de réactif (100) étant en communication avec le premier réservoir d'introduction (2a) via un canal qui est indépendant du canal capillaire pour analyse d'échantillon (3x), ou étant en communication avec le réservoir de pré-traitement,
dans lequel le procédé inclut :
le remplissage des canaux capillaires (3x, 3y) avec un tampon de travail d'électrophorèse par pression ou action capillaire ;
l'introduction de l'échantillon dans le réservoir de pré-traitement et l'hémolyse et la dilution dudit échantillon à l'intérieur ;
l'analyse de glucose de l'échantillon par réaction de l'échantillon avec le réactif de glucose ;
le déplacement de l'échantillon dans le canal capillaire (3x) pour analyse d'échantillon ;
et l'analyse de l'hémoglobine glycosylée de l'échantillon par électrophorèse capillaire.

2. Procédé capable d'analyser à la fois de l'hémoglobine glycosylée et du glucose selon la revendication 1, dans lequel
la pluralité de réservoirs de fluide (2a, 2b, 2c, 2d) comprend en outre un second réservoir d'introduction (2c) et un second réservoir de récupération (2d),
le canal capillaire (3x, 3y) comprend en outre un canal capillaire pour introduction d'échantillon (3y),
le second réservoir d'introduction (2c) et le second réservoir de récupération (2d) sont formés dans le substrat (1, 4),
le second réservoir d'introduction (2c) et le second réservoir de récupération (2d) sont en communication l'un avec l'autre via le canal capillaire pour introduction d'échantillon (3y),
le canal capillaire pour analyse d'échantillon (3x) et le canal capillaire pour introduction d'échantillon (3y) se recoupent, et
le canal capillaire pour analyse d'échantillon (3x) et le canal capillaire pour introduction d'échantillon (3y) sont en communication l'un avec l'autre à l'intersection.

3. Procédé capable d'analyser à la fois de l'hémoglobine glycosylée et du glucose selon la revendication 1, dans lequel
un premier canal de bifurcation (11x) bifurque à partir d'une partie du canal capillaire pour analyse d'échantillon (3x),
le premier canal de bifurcation (11x) est en communication avec le second réservoir d'introduction (2c),
un second canal de bifurcation (11y) bifurque à partir d'une partie du canal capillaire pour analyse d'échantillon (3x) qui est située du côté du premier réservoir de récupération (2b) par rapport au premier canal de bifurcation (11x),
le second canal de bifurcation (11y) est en communication avec le second réservoir de récupération (2d), et
le canal capillaire pour introduction d'échantillon (3y) est formé par le premier canal de bifurcation (11x), le second canal de bifurcation (11y), et une partie du canal capillaire pour analyse d'échantillon (3x) qui relie les canaux de bifurcation ; et
le canal capillaire pour introduction d'échantillon (3x) est un canal linéaire.

4. Procédé capable d'analyser à la fois de l'hémoglobine glycosylée et du glucose selon la revendication 1, ayant une longueur maximale de la puce entière dans une plage de 10 à 100 mm, une largeur maximale de la puce entière dans une plage de 10 à 60 mm, et une épaisseur maximale de la puce entière dans une plage de 0,3 à 5 mm.

5. Procédé capable d'analyser à la fois de l'hémoglobine glycosylée et du glucose selon la revendication 1, comprenant la préparation d'un échantillon dilué par dilution d'un échantillon contenant l'hémoglobine glycosylée et le glucose avec un tampon de travail d'électrophorèse, et l'introduction de l'échantillon dilué dans le premier réservoir d'introduction (2a), dans lequel un rapport en volume échantillon:tampon de travail d'électrophorèse est de 1-4 à 1-99.

6. Procédé capable d'analyser à la fois de l'hémoglobine glycosylée et du glucose selon la revendication 1,
dans lequel le canal capillaire (3x, 3y) a un diamètre maximal dans une plage de 10 à 200 µm et une longueur maximale de 0,5 à 15 cm.

7. Procédé capable d'analyser à la fois de l'hémoglobine glycosylée et du glucose selon la revendication 1,
dans lequel la puce d'analyse comprend en outre une électrode pour utilisation avec un procédé d'électrode,
l'électrode pour utilisation avec un procédé d'électrode étant disposée dans le même réservoir que le réactif d'analyse de glucose, et
le glucose étant analysé selon le procédé d'électrode utilisant l'électrode pour utilisation avec un procédé d'électrode et le réactif d'analyse de glucose.

8. Procédé capable d'analyser à la fois de l'hémoglobine glycosylée et du glucose selon la revendication 1, dans lequel
le substrat (1, 4) comprend un substrat supérieur (4) et un substrat inférieur (1),
une pluralité de trous traversants sont formés dans le substrat supérieur (4),
une rainure est formée dans le substrat inférieur (1),
le substrat supérieur (4) est stratifié sur le substrat inférieur (1),
des espaces créés en scellant les parties de fond de la pluralité de trous traversants formés dans le substrat supérieur (4) avec le substrat inférieur (1) servent de pluralité de réservoirs de fluide (2a, 2b, 2c, 2d), et
un espace créé en scellant la partie supérieure de la rainure formée dans le substrat inférieur (1) avec le substrat supérieur (4) sert de canal capillaire (3x, 3y).

9. Procédé capable d'analyser à la fois de l'hémoglobine glycosylée et du glucose selon la revendication 1, dans lequel
une pluralité de portions concaves et une rainure sont formées dans le substrat (1),
une surface du substrat (1) est scellée avec un matériau de scellage (4) qui comporte des ouvertures à des endroits correspondant à la pluralité de portions concaves,
la pluralité de portions concaves formées dans le substrat (1) servent de pluralité de réservoirs de fluide (2a, 2b, 2c, 2d), et
un espace créé en scellant la partie supérieure de la rainure formée dans le substrat (1) avec le matériau de scellage (4) sert de canal capillaire (3x, 3y).

10. Procédé capable d'analyser à la fois de l'hémoglobine glycosylée et du glucose selon la revendication 1, dans lequel
un matériau de scellage (1) est en outre inclus,
une pluralité de trous traversants sont formés dans le substrat (4),
une rainure est formée dans la surface de fond du substrat (4),
la surface de fond du substrat (4) est scellée avec le matériau de scellage (1),
des espaces créés en scellant les parties de fond de la pluralité de trous traversants formés dans le substrat (4) avec le matériau de scellage (1) servent de pluralité de réservoirs de fluide (2a, 2b, 2c, 2d), et
un espace créé en scellant la partie inférieure de la rainure formée dans la surface de fond du substrat (4) avec le matériau de scellage (1) sert de canal capillaire (3x, 3y).

11. Procédé capable d'analyser à la fois de l'hémoglobine glycosylée et du glucose selon la revendication 1, dans lequel la pluralité de réservoirs de fluide (2a, 2b, 2c, 2d) sont en communication les uns avec les autres via un tube capillaire (3x1, 3x2, 3y1, 3y2) qui est un organe indépendant du substrat (1), et le tube capillaire (3x1, 3x2, 3y1, 3y2) sert de canal capillaire (3x, 3y), ou
dans lequel la pluralité de réservoirs de fluide (2a, 2b, 2c, 2d) ont chacun un volume dans une plage de 1 à 1000 mm³, ou
dans lequel la puce d'analyse comprend en outre une pluralité d'électrodes (6a, 6b, 6c, 6d) pour utilisation avec un procédé d'électrophorèse capillaire,
dans lequel la pluralité d'électrodes (6a, 6b, 6c, 6d) pour utilisation avec un procédé d'électrophorèse capillaire sont disposées de telle sorte que leurs premières extrémités sont disposées respectivement dans la pluralité de réservoirs de fluide (2a, 2b, 2c, 2d).

12. Procédé capable d'analyser à la fois de l'hémoglobine glycosylée et du glucose selon la revendication 1, dans lequel la puce d'analyse appartient à un appareil d'analyse et dans lequel l'appareil d'analyse comprend en outre une unité d'analyse (7).
